(19) Europäisches Patentamt
European Patent Office
Office européen des brevets

(11) **EP 2 301 392 B1**

(12) **EUROPÄISCHE PATENTSCHRIFT**

(45) Veröffentlichungstag und Bekanntmachung des Hinweises auf die Patenterteilung:
**16.05.2012 Patentblatt 2012/20**

(51) Int Cl.:
***A47J 27/14*** *(2006.01)* ***A47J 37/12*** *(2006.01)*

(21) Anmeldenummer: **09290652.8**

(22) Anmeldetag: **27.08.2009**

(54) **Verfahren zum Steuern einer Bewegung eines Tiegels und Gargerät umfassend einen Tiegel**

Method for controlling a movement of a pan and cooking device comprising a pan

Procédé de commande d'un mouvement d'un creuset et appareil de cuisson comprenant un creuset

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**30.03.2011 Patentblatt 2011/13**

(60) Teilanmeldung:
**12002295.9**

(73) Patentinhaber:
• **Rational AG**
**86899 Landsberg/Lech (DE)**
• **FRIMA T SAS**
**68271 Wittenheim Cedex (FR)**

(72) Erfinder:
• **Waßmus, Reinhard**
**79395 Neuenburg a. Rhein (DE)**
• **Lingenheil, Markus**
**79206 Breisach/Oberrimsingen (DE)**
• **Thiébaud, Fabrice, Dr.**
**67600 Kintzheim (FR)**
• **Mink, Diana**
**79426 Buggingen (DE)**

(74) Vertreter: **Weber-Bruls, Dorothée**
**Jones Day**
**Nextower**
**Thurn-und-Taxis-Platz 6**
**60313 Frankfurt am Main (DE)**

(56) Entgegenhaltungen:
**EP-A- 1 488 721 WO-A-2006/037254**

**Beschreibung**

Die Erfindung betrifft ein Verfahren zum Steuern oder Regeln einer Bewegung zum Ausgießen eines liquiden Inhalts aus einem Tiegel eines Gargeräts, wobei zum Ausgießen des liquiden Inhalts der Tiegel mittels zumindest einer Antriebseinrichtung aus einer ersten Winkelstellung um einen Kippwinkel $\alpha$ in eine zweite Winkelstellung gekippt wird und die erste und die zweite Winkelstellung von zumindest einer Regel- und/oder Steuerungseinrichtung des Gargeräts eingestellt wird.

Kipper sind als Gargeräte im Stand der Technik gut bekannt, siehe z.B. die WO 2006/037254 A1. Solche Gargeräte umfassen einen beheizbaren Tiegel, in dem ein Gargut gegart werden kann. Diese Tiegel sind üblicherweise um eine Achse kippbar, so dass der Inhalt des Tiegels durch Kippen aus dem Tiegel ausgeleert werden kann.

Zur Steuerung des Auskippvorgangs sind Antriebseinrichtungen bekannt, mit denen sich das Kippen des Tiegels um die Achse erreichen lässt. Ebenso ist es für solche Gargeräte bekannt, den Füllstand des Tiegelinhalts im Tiegel direkt in dem Medium, mit dem im Tiegel gegart werden soll, zu messen. Dazu können Thermoelemente und punktuelle kapazitive Füllstandsmesseinrichtungen zum Einsatz kommen. Zudem können Kipper mit Einrichtungen für Kraftmessungen oder Momentenmessungen ausgestattet sein, mit denen das Gewicht des mit Gargut und/oder Garmedium gefüllten Tiegels bestimmt werden kann.

Ferner ist ein gattungsgemäßes Verfahren und ein gattungsgemäßes Gargerät aus der EP 1 488 721 A1 bekannt. Das Gargerät weist einen Tiegel in Form eines wannenartigen Behälters auf, der zum Aufnehmen und Zubereiten von Speisen geeignet ist. Der Behälter des Gargeräts ist um eine Schwenkachse kippbar gelagert und weist einen Ausgussschnabel auf, durch den beim Kippen des Behälters der Tiegelinhalt in Form von Flüssigkeiten oder stückigem Gargut ausgegossen werden kann.

Obwohl sich das gattungsgemäße Verfahren sowie das gattungsgemäße Gargerät grundsätzlich bewährt haben, hat sich gezeigt, dass beim Kippen des Behälters Wellenbewegungen des Tiegelinhalts entstehen können, so dass es zu einem Überschwappen des Garguts oder des Garmediums über einen Rand des Behälters kommen kann. So wird die vorhandene Antriebseinrichtung durch den Benutzer derartig eingesetzt, dass ein manuelles Kippen dadurch erfolgt, dass die Antriebseinrichtung durch Betätigung einer Taste ein- bzw. ausgeschaltet wird. Durch entsprechende Taktung der Tastenbetätigung wird der Tiegel dann für den Ausgießvorgang gekippt. Solche Bewegungen führen jedoch zu einem unstetigen Ausgießverhalten, wodurch ein stufenloses Ausgießen unterschiedlicher Produkte bei verschiedenen Füllständen aus unterschiedlichen Behältergrößen nur schwer möglich ist, insbesondere eine große Erfahrung des Bedieners des Gargeräts bedarf. Durch das Überschwappen von Gargut oder Garmedium kann es nicht nur zu einem ungewollten Verlust des Garguts oder des Garmediums kommen, sondern es besteht auch das Risiko, dass sich der Bediener des Gargeräts am heißen Tiegelinhalt verletzt.

Aufgabe der vorliegenden Erfindung ist es, das gattungsgemäße Verfahren dahingehend weiterzuentwickeln, dass das Ausgießverhalten bekannter Gargeräte mit kippbaren Behältern verbessert wird; insbesondere soll ein gezieltes, möglichst stufenloses, und gleichzeitig gleichmäßiges Ausgießen unterschiedlicher Produkte und verschiedener Füllstände aus unterschiedlichen Tiegelgrößen ermöglicht werden. Darüber hinaus soll das Kippen der Behälter unter Beachtung geltender Arbeitssicherheitsvorschriften optimal schnell und bedienerfreundlich gestaltet werden , insbesondere vollautomatisch erfolgen, so dass auch ein unerfahrener Bediener hocheffektiv und sicher mit dem Gargerät arbeiten kann.

Diese Aufgabe wird dadurch gelöst, dass das Verfahren ferner umfasst das Bestimmen des Kippwinkels $\alpha$, zumindest einer ersten Ableitung des Kippwinkels $\alpha$ und/oder zumindest einer zweiten Ableitung des Kippwinkels $\alpha$ basierend auf zumindest einer geometrischen Abmessung des Tiegels.

Weiterhin wird vorgeschlagen, dass das Verfahren auch das Regeln und/oder Steuern des Kippens von der ersten Winkelstellung in die zweite Winkelstellung mittels der Regel-und/oder Steuereinrichtung basierend auf dem bestimmten Kippwinkel $\alpha$, der ersten Ableitung und/oder der zweiten Ableitung umfasst, vorzugsweise mittels der Regel- und/oder Steuereinrichtung, als die erste Ableitung der Kippwinkel $\alpha$ nach der Zeit abgeleitet wird, insbesondere als die erste Ableitung eine Winkelgeschwindigkeit $\omega$ des Kippwinkels $\alpha$ bestimmt wird, und/oder als die zweite Ableitung der Kippwinkel $\alpha$ zweifach nach der Zeit abgeleitet wird, insbesondere als die zweite Ableitung eine Winkelbeschleunigung $\psi$ des Kippwinkels $\alpha$ bestimmt wird, und/oder der liquide Inhalt über zumindest einen Ausguss des Tiegels ausgegossen, insbesondere durch den Ausguss kanalisiert und/oder geleitet wird.

Auch ist mit der Erfindung vorgesehen, dass bei dem Bestimmen der geometrischen Abmessung des Tiegels zumindest eine Breite, eine Höhe, eine Tiefe, ein Neigungswinkel, insbesondere zumindest einer Wand, eine Querschnittsform, eine Umfangsform, zumindest eine Größe und/oder Neigung einer Bodenfläche, zumindest eine Umfangslänge, zumindest ein Fassungsvolumen und/oder zumindest eine Normgröße des Ausgusses und/oder des Tiegels verwendet und/oder bestimmt wird bzw. werden.

Weiterhin schlägt die Erfindung vor, dass die erste Winkelstellung, die zweite Winkelstellung, der Kippwinkel $\alpha$, die erste Ableitung des Kippwinkels $\alpha$ und/oder die zweite Ableitung des Kippwinkels $\alpha$ basierend auf zumindest einem Füllstand des liquiden Inhalts in dem Tiegel und/oder zumindest einer Dichte und/oder Viskosität des liquiden Inhalts des Tiegels bestimmt wird, wobei vorzugsweise der Füllstand mittels zumindest eines, insbesondere mit zumindest einer Wand des Tiegels in Wirkverbindung stehenden, ersten Sensors gemessen wird, vorzugsweise der Füllstand kontinuierlich und/oder unter Einsatz elektromagnetischer, optischer und/oder akustischer Strahlung, wie Ultraschallstrahlung, Infrarotstrahlung, Radarstrahlung, Mikrowellenstrahlung, Laserstrahlung und/oder Lichtstrahlung und/oder mittels zumindest eines Thermoelementes, vorzugsweise, insbesondere mittels eines Zeitgebers in Abhängigkeit von einem zeitlichen Verlauf eines Temperatursignals des Thermoelements, kapazitiv und/oder mittels einer Vielzahl von ersten Sensoren gemessen wird.

Besonders bevorzugt ist, dass die erste Winkelstellung, die zweite Winkelstellung, der Kippwinkel $\alpha$, die erste Ableitung des Kippwinkels $\alpha$ und/oder die zweite Ableitung des Kippwinkels $\alpha$ basierend auf einer ersten Masse des Tiegels und/oder einer zweiten Masse des liquiden Inhalts bestimmt wird, wobei vorzugsweise die erste Masse und/oder die zweite Masse kontinuierlich und/oder in zumindest einer Arbeitsposition, die insbesondere durch eine Winkelstellung von 0° definiert ist, und/oder mittels zumindest eines zweiten Sensors, insbesondere umfassend zumindest einen, vorzugsweise mit der Antriebseinrichtung und/oder dem Tiegel in Wirkverbindung stehenden, Kraftsensor, einen Drehmomentsensor, einen Momentsensor und/oder einen Dehnungsmessstreifen, vorzugsweise mit zumindest einer Kraftmessdose, bestimmt wird.

Auch kann ein erfindungsgemäßes Verfahren dadurch gekennzeichnet sein, dass die geometrische Abmessung, eine Art des liquiden Inhalts, die Viskosität und/oder die Dichte, der Füllstand, die erste Masse und/oder die zweite Masse basierend auf einer Auswahl und/oder Bestimmung einer Betriebsart des Gargeräts, eines Reinigungsprogramms, eines Garprogramms, eines Garprozesses, einer Gargutart und/oder einer Art eines Garmediums und/oder Reinigungsmediums, basierend auf einem durch das Gargerät, insbesondere die Regel- und/oder Steuereinrichtung, gesteuerten Befüllen des Tiegels mit einem Gar- oder Reinigungsmedium und/oder basierend auf einer von einem Benutzer des Gargeräts vorgenommenen Vorgabe bestimmt wird bzw. werden und/oder basierend auf zumindest einer Einstellung des Benutzers mittels einer, insbesondere eine Benutzeroberfläche darbietende, Eingabeeinrichtung des Gargeräts bestimmt wird, wobei vorzugsweise zur Bestimmung der geometrischen Abmessung, der Art des liquiden Inhalts, der Viskosität und/oder der Dichte, des Füllstands, der ersten Masse und/oder der zweiten Masse eine Vielzahl von Betriebsarten des Gargeräts, von Tiegelnormgrößen, von Tiegelgrößen, von Tiegelvolumina, von Reinigungsprogrammen, von Garprogrammen, von Garprozessen, von Gargutartarten und/oder Arten des Garmediums und/oder Reinigungsmediums, insbesondere Gargutartarten und/oder Arten des Garmediums und/oder Reinigungsmediums mit vergleichbaren Dichten und/oder Viskositäten, in Gruppen zusammengefasst und/oder geclustert werden.

Weiterhin wird mit der Erfindung vorgeschlagen, dass die Dichte des liquiden Inhalts, insbesondere mittels der Regel- und/oder Steuereinrichtung, aus der Füllstandhöhe und/oder einem, insbesondere mittels der geometrischen Abmessung und/oder der Füllstandshöhe bestimmten, Volumen des liquiden Inhalts und der ersten Masse bestimmt wird und/oder die Viskosität und/oder zumindest eine weitere Eigenschaften des liquiden Inhalts durch eine Frequenz, eine Amplitude und/oder ein Abklingverhalten einer Masseschwingung des liquiden Inhalts, insbesondere resultierend aus und/oder zeitlich nach einer vordefinierten Winkelbeschleunigung $\psi_d$ bestimmt wird.

Auch ist bevorzugt, dass, vorzugsweise mittels der Regel- und/oder Steuereinrichtung, die erste Ableitung, die zweite Ableitung umgekehrt proportional, reziprok proportional, antiproportional und/oder indirekt proportional dem Füllstand, der ersten Masse, der Dichte und/oder der-Viskosität bestimmt wird, bei der Bestimmung der-ersten-Winkelstellung, der zweiten Winkelstellung, des Kippwinkels $\alpha$, der ersten Ableitung und/oder der zweiten Ableitung bestehende Arbeitssicherheitsnormen berücksichtigt werden, die erste Winkelstellung, die zweite Winkelstellung, der Kippwinkel $\alpha$, die erste Ableitung und/oder die zweite Ableitung stufenlos eingestellt wird bzw. werden und/oder die erste Winkelstellung, die zweite Winkelstellung, der Kippwinkel $\alpha$, die erste Ableitung und/oder die zweite Ableitung, insbesondere kontinuierlich und/oder mittels zumindest eines dritten Sensors, gemessen wird.

Weiterhin kann ein erfindungsgemäßes Verfahren dadurch gekennzeichnet sein, dass zum Bestimmen der ersten Winkelstellung, der zweiten Winkelstellung, des Kippwinkels $\alpha$, der ersten Ableitung des Kippwinkels $\alpha$ und/oder der zweiten Ableitung des Kippwinkels $\alpha$ in zumindest einer Tabelle und/oder in einem Speicher des Gargeräts hinterlegte, vorzugsweise zuvor empirisch bestimmte, Werte verwendet werden und/oder mathematische Verfahren verwendet werden.

Auch wird mit der Erfindung vorgeschlagen, dass zum Bestimmen der zweiten Winkelstellung, des Kippwinkels $\alpha$, der ersten Ableitung des Kippwinkels $\alpha$ und/oder der zweiten Ableitung des Kippwinkels $\alpha$ ein Ausgusswinkel $\alpha_A$, insbesondere eine zweite Winkelstellung, bei dem bei einer Veränderung einer Winkelposition des Tiegels, vorzugsweise einer Veränderung aus der Arbeitsposition, der liquide Inhalt beginnt aus dem Tiegel, insbesondere über den Ausguss, auszutreten, bestimmt wird, ein kritischer Drehwinkel $\alpha_d$ des Tiegels 1' bestimmt wird, bei dem sich insbesondere ein Bedeckungsgrad eines Tiegelbodens mit dem liquiden Inhalt reduziert, bestimmt wird und/oder der Kippwinkel $\alpha$, die erste Ableitung des Kippwinkels $\alpha$ und/oder die zweite Ableitung des Kippwinkels $\alpha$ basierend auf der ersten Winkelstellung und/oder zweiten Winkelstellung bestimmt wird bzw. werden, insbesondere ein maximal erlaubter Wert der ersten Ableitung reduziert wird, wenn die zweite Winkelstellung größer als ein, insbesondere in Abhängigkeit von einer maximalen zweiten Winkelstellung, bestimmter, vorgegebener Wert ist und/oder ein Differenz zwischen der ersten Winkelstellung und dem Ausgusswinkel geringer als ein vorgegebener Wert ist.

Bei der vorgenannten Ausführungsform ist besonders bevorzugt, dass der Kippwinkels $\alpha$, die erste Ableitung des Kippwinkels $\alpha$ und/oder die zweite Ableitung des Kippwinkels $\alpha$ in einem Winkelbereich zwischen der Arbeitsposition und dem Ausgusswinkel und/oder dem kritischen Drehwinkel-im-Wesentlichen-unabhängig von einem vorgegebenen Wert für ein Ausgussvolumen und/oder eine Ausgussgeschwindigkeit des liquiden Inhalts aus dem Tiegel bestimmt wird, insbesondere im wesentlichen ausschließlich basierend auf der Dichte, der Viskosität, dem Füllstand, der ersten Masse und/oder der zweiten Masse, und/oder die erste Ableitung des Kippwinkels $\alpha$ vor Erreichen des kritischen Drehwinkels $\alpha_d$ reduziert wird, vorzugsweise um eine Wellenbewegung und/oder ein Austreten des liquiden Inhalts, insbesondere im Bereich des Ausgusses und/oder außerhalb des Ausgusses, zu vermeiden.

Insbesondere für die beiden vorgenannten Ausführungsformen wird vorgeschlagen, dass der Kippwinkel $\alpha$, die erste Ableitung des Kippwinkels $\alpha$ und/oder die zweite Ableitung des Kippwinkels $\alpha$ in einem Winkelbereich zwischen dem Ausgusswinkel und der maximalen zweiten Winkelstellung zumindest zusätzlich in Abhängigkeit von einem vorgegebenen Wert für ein Ausgussvolumen und/oder eine Ausgussgeschwindigkeit des liquiden Inhalts aus dem Tiegel bestimmt wird, insbesondere um einen kontinuierlichen Ausfluss des maximal möglichen Volumens des liquiden Inhalts in einer minimalen Zeitspanne zu erreichen.

Schließlich wird für das erfindungsgemäße Verfahren vorgeschlagen, dass die zweite Winkelstellung in Abhängigkeit von einem Volumen des liquiden Inhalts des Tiegels, der aus dem Tiegel ausgegossen werden soll, bestimmt wird, insbesondere ein Kippbewegung des Tiegels bei Erreichen der zweiten Winkelstellung gestoppt und/oder reversiert wird, insbesondere durch Reduzierung der ersten Ableitung von einem positiven Wert auf Null oder einen negativen Wert, wobei vorzugsweise nach Erreichen der zweiten Winkelstellung der Ausgusswinkel erneut bestimmt wird und/oder die Kippbewegung, insbesondere durch Bestimmung einer neuen zweiten Winkelstellung, in Abhängigkeit von dem Volumen des liquiden Inhalts des Tiegels, der aus dem Tiegel ausgegossen werden soll, mit einer positiven ersten Ableitung fortgeführt wird.

Ein Gargerät, umfassend zumindest einen mit einem liquiden Inhalt befüllbaren Tiegel, zumindest eine Antriebseinrichtung, mittels der der Tiegel um eine erste Achse kippbar ist, und eine mit der Antriebseinrichtung in Wirkverbindung stehende Regel- und/oder Steuereinrichtung, kann über seine die Regel- und/oder Steuereinrichtung zur Durchführung des erfindungsgemäßen Verfahrens eingerichtet sein.

Dabei wird für das Gargerät vorgeschlagen, dass der Tiegel zumindest einen Ausguss umfasst, das Gargerät in Form eines Kippers ausgebildet ist und/oder das Gargerät ferner, insbesondere mit der Regel- und/oder Steuereinrichtung in Wirkverbindung stehend, zumindest einen ersten Sensor, zumindest einen zweiten Sensor, zumindest einen dritten Sensor, zumindest einen Zeitgeber, zumindest eine Eingabeeinrichtung, vorzugsweise umfassend zumindest einen Touchscreen und/oder zur Durchführung einer Eingabe und/oder zur Eingabe einer Vorgabe durch einen Benutzer, und/oder zumindest einen Speicher umfasst.

Die überraschende Erkenntnis der Erfindung ist darin zu sehen, dass es bei Berücksichtigung der Tiegelgeometrie möglich ist, die Bewegungen des Tiegels derart zu steuern, dass einerseits ein Überschwappen aus dem Tiegel verhindert wird und, wenn diese gewünscht ist, ein nahezu konstanter Volumenstrom eines liquiden Inhalts des Tiegels bzw. eines Tiegelinhalts aus dem Tiegel, insbesondere über einen Ausguss des Tiegels, erfolgen kann, und anderseits die Bewegungen des Tiegels dennoch möglichst schnell erfolgen können. Insbesondere kann dabei zusätzlich eine Füllstandshöhe des Tiegelinhalts und/oder eine Dichte und/oder Viskosität des liquiden Inhalts des Tiegels bzw. Tiegelinhalts in das Verfahren neben der Tiegelgeometrie einfließen. Ferner kann erreicht werden, dass ein Volumenstrom aus dem Tiegel kontinuierlich bis zu einem maximalen Wert ansteigt. Die Idee der Erfindung ist also bereits in der Erkenntnis zu sehen, dass eine Optimierung des Ausgießvorgangs eines Tiegels dadurch erreicht wird, dass als Parameter eine Tiegelgeometrie, vorzugsweise unter Heranziehung einer Form eines Ausgusses, einer Fließeigenschaft des Tiegelinhalts, wie der Dichte, der Konsistenz und/oder der Viskosität und/oder einem Füllstand, bei der Berechnung von Steuerungsdaten für den Kippvorgang des Tiegels berücksichtigt werden. Insbesondere kann ein sicheres Ausgießen eines Tiegelinhalts bei größtmöglichen Volumenfluss und damit in einer kürzmöglichsten Zeitspanne ohne Beeinträchtigung der Arbeitssicherheit erreicht werden.

Bei den bevorzugten Ausführungsformen der Erfindung wird also ferner ausgenutzt, dass neben der Geometrie des Tiegels auch die zuvor angeführten Eigenschaften des Tiegelinhalts und auch die Form des Ausgusses, der Füllstand im Tiegel sowie die Masse des Tiegelinhalts Einfluss darauf haben, wie sich der Tiegelinhalt bei einer Bewegung des Tiegels verhält. Diese Größen sind für die Steuerung des Kippvorgangs des Tiegels demzufolge ebenfalls von Interesse, da beispielsweise durch die Ausgussgeometrie das Leiten bzw. Kanalisieren des Tiegelinhalts bzw. liquiden Inhalts aus dem Tiegel wesentlich beeinflusst wird. Daher kann es für die vorliegende Erfindung vorteilhaft sein, eine oder mehrere dieser Größen mit Hilfe von Sensoren oder durch andere Mittel zu bestimmen, und bei der Berechnung von Steuerungsdaten für die Bewegung des Tiegels zu berücksichtigen. Eine Bestimmung der Geometrie des Tiegels wird vorzugsweise dadurch vorgenommen, dass in einer Datentabelle Abmaße des Tiegels hinterlegt und bei Bedarf, insbesondere in Abhängigkeit von dem verwendeten Tiegel und/oder dessen Normmaßen, abgerufen werden. Auch kann ein Benutzer die Abmessungen erfassen und eingeben, es ist jedoch die Hinterlegung der Werte in Tabellen bevorzugt.

Werden die Parameter des Tiegelinhalts nicht durch eine geeignete Sensorik bestimmt, so kann von einer typischen Konsistenz des Tiegelinhalts ausgegangen werden. Häufig kann davon ausgegangen werden, dass es sich bei dem Tiegelinhalt entweder um ein wässriges Gargut handelt, d. h. das Gargut im Wesentlichen flüssig ist und nur einige wenige feste Bestandteile aufweist oder von einer öligen, zähflüssigen Konsistenz des Garmediums und damit auch des Tiegelinhalts ausgegangen werden.

Auf die Art des Tiegelinhalts kann auch dadurch zurückgeschlossen werden, dass die Eingaben eines Anwenders an einer Eingabeeinrichtung des Gargeräts berücksichtigt werden. So kann beispielsweise von einer wässrigen Konsistenz des Tiegelinhalts ausgegangen werden, wenn ein Garprogramm "Nudeln kochen" angewählt wurde. Bei der Anwahl eines Garprogramms "Pudding kochen" muss hingegen von einer zäheren Konsistenz des Tiegelinhalts ausgegangen werden. Insbesondere wenn das Gargerät den Inhalt des Tiegels selbst auffüllt, indem es beispielsweise Wasser in den Tiegel einführt, ist von einem bekannten Tiegelinhalt auszugehen.

Solche Informationen über die Eingaben des Anwenders und/oder die Steuerung des Gargeräts werden vorzugsweise gemeinsam mit den Daten der Sensoren ausgewertet. So ist es beispielsweise möglich, das Gewicht des Tiegelinhalts mit Hilfe zumindest eines Kraftsensors, der mit dem Tiegel in Wirkverbindung steht, zu messen und daraus die Masse des Tiegelinhalts zu berechnen. Wird gleichzeitig ein Garprogramm, beispielsweise für Gulasch, gewählt und im Laufe des Garprogramms über einen Wasseranschluss des Gargeräts Wasser in den Tiegel gefüllt, so kann daraus die Konsistenz, insbesondere Dichte und/oder Viskosität, des Tiegelinhalts abgeschätzt werden.

Ebenso ist es möglich, den Temperaturanstieg des Tiegelinhalts beim Erwärmen desselben dahingehend auszuwerten, dass bei einem langsamen Temperaturanstieg von einer großen thermischen Last ausgegangen werden kann, während ein schneller Temperaturanstieg des Tiegelinhalts auf eine kleine thermische Last schließen lässt. Befinden sich im Tiegel vornehmlich wässrige Substanzen, so kann bei bekanntem Wirkungsgrad und bekannter Leistung der Heizelement des Tiegels sowie bei bekannter Wärmekapazität von Wasser direkt auf die Masse des Tiegelinhalts rückgeschlossen werden.

Der Tiegel des Gargeräts kann durch kontinuierliche Beschleunigungs- und Geschwindigkeitsprofile oder durch verschiedene abgestimmte Beschleunigungs- und Geschwindigkeitsstufen schnell oder weniger schnell über eine Regelung intelligent bewegt bzw. gekippt werden. Dadurch kann ein entsprechend dem Garmedium und gegebenenfalls anderer Parameter, wie dem Füllstand, geeignetes Entleeren des Tiegels ohne Wellenbewegungen und ohne ein Überschwappen der Produkte über die Ausgussgeometrie hinaus realisiert werden. Dazu muss die Antriebseinrichtung, mit dem der Tiegel von einer ersten Winkelstellung um einen Kippwinkel in eine zweite Winkelstellung gekippt wird, d. h. um eine Achse gedreht wird, geregelt werden bzw. regelbar sein.

Zudem können gemäß der Erfindung bei der Bewegung des Tiegels, also beispielsweise beim Kippen des Tiegels zwecks Entleerung desselben mit maximalen Beschleunigungen und Geschwindigkeiten, problemlos Arbeitssicherheitsnormen in die Steuerung der Tiegelposition einfließen und so die Arbeitssicherheit erhöht werden und so gleichzeitig eine größtmögliche Arbeitseffizienz und Bedienfreundlichkeit erreicht werden.

Unter einer Winkelstellung ist im Sinne der vorliegenden Erfindung die Vorgabe einer bestimmten Kippwinkelposition zu verstehen aus der oder in die der Tiegel durch einen Kippenwinkel $\alpha$ verfahren wird, wobei gleichzeitig eine Winkelgeschwindigkeit $\omega$ des Kippwinkels $\alpha$ und/oder eine Winkelbeschleunigung $\psi$ des Kippwinkels $\alpha$ und/oder ein zeitlicher Verlauf derselben vorgegeben wird, um zu einer zweiten Winkelstellung zu gelangen. Eine Winkelstellungveränderung im Sinne der Erfindung umfasst also die Vorgabe eines Kippwinkels $\alpha$ sowie die Vorgabe einer Winkelgeschwindigkeit $\omega$ und/oder einer Winkelbeschleunigung $\psi$ zur Steuerung der Bewegung des Tiegels.

Der Füllstand des Tiegelinhalts kann mit kontinuierlichen Messverfahren bzw. Messmethoden bestimmt werden. Beispiele hierfür sind Ultraschallsensoren, Radarsensoren, Lasermessungen und kapazitive Messungen, die direkt im Tiegelinhalt messen. Anstatt eines kontinuierlichen Messverfahrens können die Messungen auch in zeitlich diskreten Schritten erfolgen. Die Anzahl der Schritte kann dabei auch sehr klein sein, so dass im Extremfall sogar eine einzige Messungen ausreichend sein kann.

Zur Messung des Füllstands bzw. der Füllhöhe des liquiden Inhalts bzw. Tiegelinhalts kann auch eine Vielzahl von Thermoelementen eingesetzt werden, die senkrecht an der Tiegelwand angebracht sind. Durch das Erwärmen des Tiegelinhalts haben diejenigen Thermoelemente, die unterhalb des Oberfläche des Tiegelinhalts liegen, eine andere, insbesondere höhere Temperatur als die außerhalb des Tiegelinhalts liegenden Thermoelemente. Solche Thermoelemente liefern zum Einen anhand der einzelnen Temperaturen und anhand eines interpolierbaren Temperaturverlaufs Informationen zum Füllstand, zum Anderen können diese Informationen über die Temperaturen und den Temperaturverlauf auch intelligent für automatische Garprogramme genutzt werden.

Bei einer manuellen Wahl einer Betriebsart oder durch die Anwahl eines Garprogramms oder Reinigungsprogramms werden ebenfalls wichtige Informationen über das Garverfahren und das Garmedium, bzw. das Reinigungsmedium sowie das Gargut und damit über den Tiegelinhalt geliefert. Auch diese Informationen können dazu genutzt werden, die Bewegung des Tiegels intelligent zu steuern.

Der Volumenstrom des Tiegelinhalts aus dem Tiegel wird berechnet aufgrund der Tiegelgeometrie und dem Kippwinkel des Tiegels. Durch die Steuerung oder Regelung des zeitabhängigen Verhaltens des Kippwinkels, ist der Volumenstrom des Tiegelinhalts aus dem Tiegel steuerbar. Hierzu kann jede Zeitabhängigkeit des Kippwinkels des Tiegels genutzt werden. Dazu sind beispielsweise alle zeitlichen Ableitungen des Kippwinkels geeignet. Insbesondere die Winkelgeschwindigkeit, die Winkelbeschleunigung und/oder die zeitliche Änderung der Winkelbeschleunigung des Kippwinkels sind zur Steuerung oder Regelung des Volumenstroms aus dem Tiegel geeignet.

Der Volumenstrom, der durch das aus dem Tiegel austretende Volumen des Tiegelinhalts pro Zeiteinheit definiert ist, kann gemessen und/oder berechnet werden. Zusätzlich oder alternativ dazu kann der Volumenstrom auch empirisch für definierte Bewegungen des Tiegels bestimmt werden. Die Werte für den Volumenstrom sind dann in einem Speicher des Gargeräts hinterlegt, insbesondere in Abhängigkeit von jeweiligen Winkelstellungen. Jedem Volumenstrom ist dazu eine Winkelgeschwindigkeit und/oder Winkelbeschleunigung und ein Kippwinkel zugeordnet. Der Volumenstrom wird dabei in Abhängigkeit von der Konsistenz des Tiegelinhalts bestimmt und demzufolge sind auch hierzu Daten im Speicher hinterlegt. Dort sind dann verschiedene Tabellen für verschiedene Konsistenzen des Tiegelinhalts hinterlegt oder es werden ein oder mehrere Korrekturparameter hinterlegt mit denen der Volumenfluss in Abhängigkeit von der Dichte und/oder Konsistenz rechnerisch korrigiert wird. Die empirische Bestimmung des Volumenflusses bietet sich vor allem bei komplizierten Tiegelgeometrien an, bei denen der Volumenfluss nicht leicht berechnet werden kann.

Bestimmte Garmedien können anhand ihrer Dichte geclustert werden, d. h. verschiedene Dichten unterschiedlicher Garmedien bzw. Tiegelinhalte können logisch zusammengefasst werden. So wird beispielsweise ein Tiegel, der mit Wasser und Nudeln gefüllt ist, sich praktisch identisch zu einem Tiegelinhalt einer dünnen Suppe verhalten. Dementsprechend können solche Tiegelinhalte zu einem typischen Tiegelinhalt zusammengefasst und dadurch geclustert werden. Die Regelung der Tiegelbewegung richtet sich dann nach den typisierten Tiegelinhalten.

Eine Kombination der Messung des Füllstands bzw. der Füllstandshöhe mit einer Masseerkennung des Tiegelinhalts ermöglicht es, die durchschnittliche Dichte des Tiegelinhalts auf einfache Weise zu bestimmen, um die erfindungsgemäße Ausguss- bzw. Tiegelbewegungssteuerung bzw. -regelung zu erreichen. Eine Massenerkennung ist beispielsweise mit einem Kraft-/Momentensensor oder direkt über Dehnungsmessstreifen durchführbar. Bei einer Anwendung einer oder mehrerer Kraftmessdosen werden diese dazu an Auflagepunkten angebracht, an denen sich der Tiegel abstützt.

Durch all diese Maßnahmen wird dem Anwender bzw. Benutzer eines erfindungsgemäßen Gargeräts, insbesondere erfindungsgemäßen Kippers, nach einer Garanwendung oder einem Reinigungsvorgang das Entleeren des Tiegels erleichtert. Die Probleme, die besonders bei großen Mengen an Tiegelinhalt, und/oder dickflüssigem Tiegelinhalt, beispielsweise durch Ausbildung von Wellenbewegung oder einem Überschwappen des Tiegelinhalts, bisher auftraten, sind bei Verwendung des vorgegebenen Verfahrens kein Problem mehr. Insbesondere wird der Benutzer des Gargeräts durch das erfindungsgemäße Verfahren entlastet, da ein Entleeren des Tiegels erstmalig vollautomatisch erfolgen kann, ohne dass es einer Überwachung dieses Vorganges durch den Benutzer bedarf und gleichzeitig die Arbeitseffizienz weiter dadurch gesteigert, dass immer der größtmögliche Volumenstrom aus dem Tiegel eingestellt und so ein für jeden Tiegelinhalt eine effiziente vollautomatische Entleerung sichergestellt werden kann, insbesondere kleine Mengen schnell entleert werden können.

Weitere Merkmale und Vorteile der Erfindung ergeben sich aus der nachfolgenden Beschreibung, in der Ausführungsbeispiele erfindungsgemäßer Verfahren und Gargeräte anhand schematischer Zeichnungen und anhand von Diagrammen beispielhaft erläutert werden. Dabei zeigt:

Figur 1     eine perspektivische, schematische Darstellung eines erfindungsgemäßen Gar- geräts für ein erfindungsgemäßes Verfahren von schräg unten;

Figur 2     eine andere perspektivische, schematische Darstellung des Gargeräts nach Fi- gur 1 von schräg oben;

Figur 3     eine perspektivische, schematische Darstellung eines gefüllten Tiegels zur Er- läuterung eines erfindungsgemäßen Verfahrens;

Figur 4     eine schematische Schnittansicht eines gekippten Tiegels zur Erläuterung eines erfindungsgemäßen Verfahrens;

Figur 5     eine schematische Schnittansicht eines stärker gekippten Tiegels zur Erläute- rung eines erfindungsgemäßen Verfahrens;

Figur 6     ein Diagramm der Winkelgeschwindigkeit ω in Abhängigkeit von der Winkel- stellung für ein erfindungsgemäßes Verfahren;

Figur 7     ein anderes Diagramm der Winkelgeschwindigkeit ω in Abhängigkeit von der Winkelstellung für ein erfindungsgemäßes Verfahren; und

Figur 8 ein Diagramm der Winkelstellung in Abhängigkeit von der Zeit t für ein erfin- dungsgemäßes Verfahren.

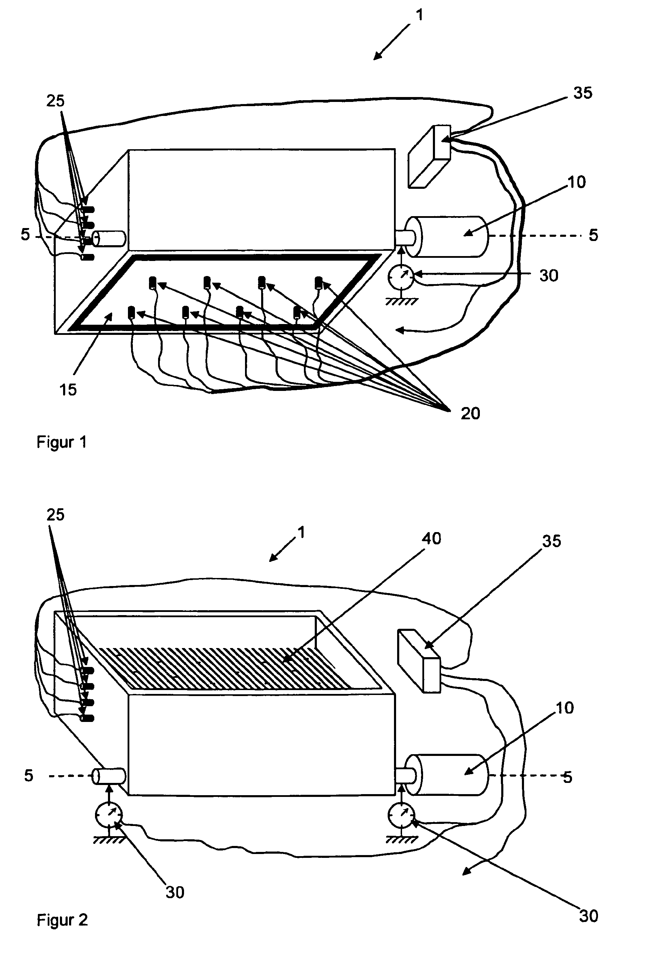

Figur 1 zeigt einen Tiegel 1 für ein erfindungsgemäßes Gargerät, das für die Durchführung eines erfindungsgemäßen Verfahrens eingerichtet ist. Der Tiegel weist vorbestimmte und in Datentabellen hinterlegte geometrische Abmessungen auf und lässt sich um eine Drehachse 5 kippen. Zum Kippen des Tiegels 1 ist eine Antriebseinrichtung in Form eines Motors 10 vorgesehen. Auf dem Tiegelboden 15 sind acht Thermoelemente 20 angebracht, mit denen die Temperaturverteilung am Tiegelboden 15 messbar ist.

Mit einer (Seiten-)Wand des Tiegels 1 stehen fünf erste Sensoren 25 zur Bestimmung eines Füllstands eines liquiden Inhalts des Tiegels bzw. eines Tiegelinhaltes in Wirkverbindung, sind insbesondere an der Wand angebracht. Bei diesen Sensoren 25 kann es sich beispielsweise um kapazitive Sensoren aber auch um Thermoelemente handeln.

Mit den Punkten der Drehachse 5, an denen der Tiegel 1 gelagert ist, stehen zweite Sensoren in Form von Masseerkennungssensoren 30 (nur der rechte Masseerkennungssensor 30 ist in Figur 1 gezeigt) in Wirkverbindung, mit denen eine erste Masse in Form des Gewichts des Tiegels 1 und eine zweite Masse in Form des Gewichts des Tiegelinhalts bestimmt werden können. Die Thermoelemente 20, die Füllstandssensoren 25 und die Masseerkennungssensoren 30 sind mit einer Regel- und/oder Steuereinrichtung in Form einer Steuerungseinrichtung 35 verbunden, insbesondere an diese angeschlossen. Die Steuerungseinrichtung 35 übernimmt auch die Steuerung des Motors 10. Als Masseerkennungssensoren 30 kommen neben einfachen Waagen zur Bestimmung der Gewichtskraft des Tiegels 1 mit dem Tiegelinhalt auch Drehmomentsensoren in Frage, die die an den Lagern der Achse 5 angreifenden Drehmomente bestimmen. Insbesondere bei einer Bewegung des Tiegels 1 mit dem Tiegelinhalt lassen sich so Rückschlüsse auf die im Tiegel 1 enthaltene zweite Masse des Tiegelinhalts ziehen.

Wird der Tiegel 1 mit einem Gargut und einem flüssigen Garmedium gefüllt, lässt sich der Füllstand über die Füllstandssensoren 25 spätestens dann mit Thermoelementen erkennen, wenn das Gargut und das Garmedium erhitzt wird. Die Erwärmung des Tiegelbodens 15 kann mit Hilfe der Thermoelemente 20 verfolgt werden. Die Gewichtsdifferenz zwischen dem leeren und dem gefüllten Tiegel 1 wird mit Hilfe der Masseerkennungssensoren 30 bestimmt. Die Steuerung 35 berechnet aus dem Temperaturverlauf der Thermoelemente 20 den Energieeintrag in den Tiegelinhalt. Dazu ist die Steuerung 35 mit einem Zeitgeber (nicht gezeigt) ausgestattet.

Die Informationen bezüglich des Wärmeeintrags in den Tiegelinhalt, der Masse des Tiegelinhalts über die Masseerkennungssensoren 30 und den Füllstand des Tiegelinhalts über die Füllstandssensoren 25 werden von der Steuerungseinrichtung 35 ausgewertet, um möglichst detaillierte Informationen über die Art und die Konsistenz des Tiegelinhalts zu gewinnen.

Aus diesen Informationen, insbesondere den geometrischen Abmessungen des Tiegels 1 und bedarfsweise den weiteren Informationen zu dem Tiegelinhalt, berechnet die Steuerungsvorrichtung 35, mit welcher Winkelgeschwin- digkeit $\omega$ und/oder mit welcher Winkelbeschleunigung $\psi$ der Tiegel mit Hilfe des Motors 10 um die Achse 5 gekippt werden kann, ohne dass es zu ungewünschten Bewegungen des Tiegelinhalts, wie z. B. starken Wellenbewegungen und Überschwappen, kommen kann.

Figur 2 zeigt eine andere Perspektive des Tiegels 1 nach Figur 1 für ein erfindungsgemäßes Verfahren bzw. Gargerät. In dieser Ansicht ist der liquide Inhalt des Tiegels bzw. Tiegelinhalts 40 als schraffierte Fläche zu erkennen. Die Unterseite des Tiegels 1 und die daran angebrachten Thermoelemente 20 sind in Figur 2 nicht dargestellt. Dafür ist in Figur 2 dargestellt, dass die Masseerkennungssensoren 30 auf beiden Seiten der Drehachse 5 relativ zu dem Tiegel 1, um die der Tiegel 1 mit Hilfe des Motors 10 gedreht wird, angebracht sind.

Die Füllstandssensoren 25 sind in Figur 2 auf der linken Seite, also an der in Figur 2 linken Wand des Tiegels 1 zu erkennen. Alle Sensoren 25, 30 sind mit der Steuerungseinrichtung 35 verbunden. Das gleiche gilt für den Motor 10, der als Antrieb zum Kippen des Tiegels 1 um die Drehachse 5 dient.

Wird der Tiegel 1 derart um die Drehachse 5 gekippt, dass eine Drehung aus Richtung des Motors 10, also von rechts in Figur 2 auf den Tiegel 1 entgegen dem Uhrzeigersinn erfolgt, d. h. die hintere Tiegelkante, also die der Drehachse 5 gegenüberliegende Kante des Tiegels 1 nach oben bewegt wird, wird der Tiegelinhalt 40 über die vordere Kante des Tiegels 1, also auf den Betrachter der Figur 2 zu, ausgekippt. Die vordere Kante des Tiegels 1 ist dann also der Ausguss des Tiegels 1.

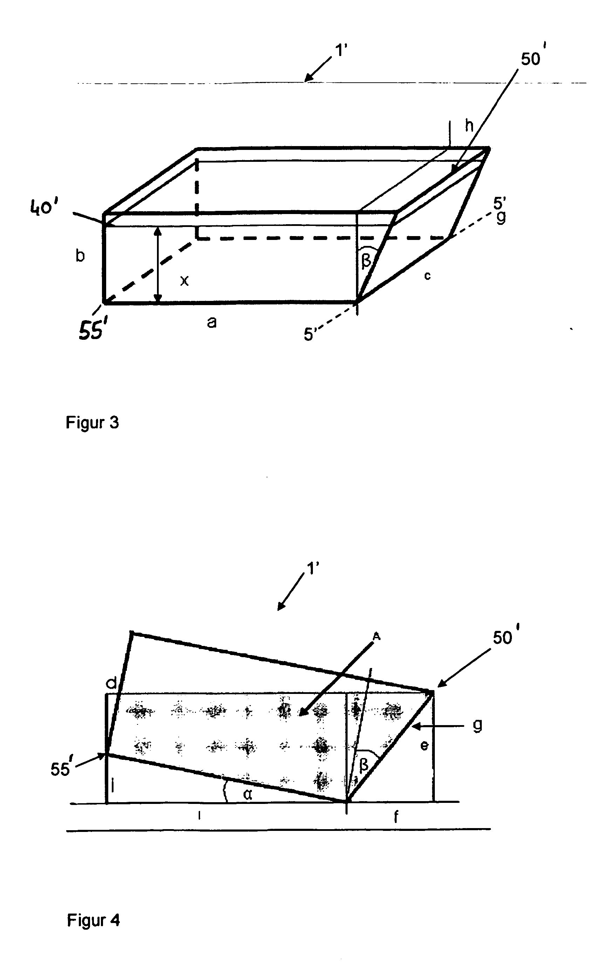

Figur 3 zeigt eine schematische, perspektivische Darstellung eines Tiegels 1' für ein erfindungsgemäßes Gargerät, mit dem sich ein erfindungsgemäßes Verfahren durchführen lässt. Elemente des Tiegels 1', die denjenigen des Tiegels 1 entsprechen, tragen die gleichen Bezeichnung, allerdings einfach gestrichen. Bei dem Tiegel 1' dient eine rechte Oberkante 50' als Ausgusskante. Um das Ausgussverhalten eines Tiegels objektiver beschreiben zu können, werden im Folgenden Berechnungen zum Ausgießen eines idealisierten Tiegels 1', wie er in Figur 3 dargestellt ist, vorgestellt.

Dazu wird zunächst angenommen, dass der Tiegel 1' rechteckig ist, wobei die Grundfläche des Tiegelbodens stets unverändert bleibt. Ebenfalls unverändert bleibt das Nutzvolumen V des Tiegels, welches beispielsweise einhundert Liter betragen kann. Die für die Ausgussgeometrie vorgesehene, in Figur 3 rechte Wand (der Ausguss) mit der Ausgusskante bzw. Oberkante 50 kann um ihren tiefsten Punkt, also um die Achse 5', gedreht werden. Die für den Ausguss vorgesehene rechte Wand ist um den Neigungswinkel β geneigt. Durch das Kippen des Tiegels 1' um die Achse 5' wird die linke untere Kante 55' am Tiegelboden nach oben gekippt.

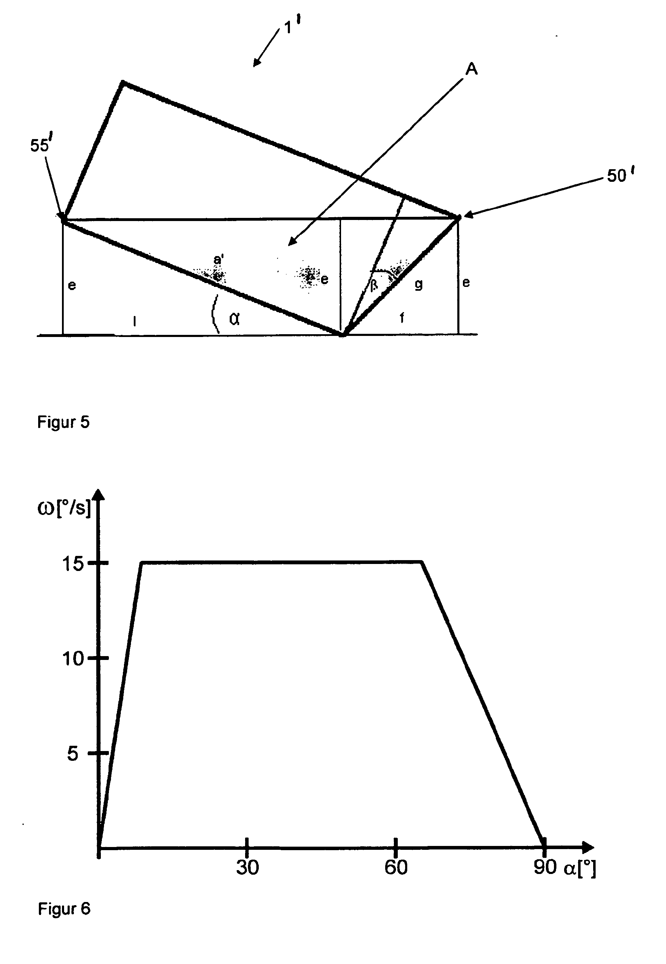

Der gleiche Tiegel 1' ist in einer Schnittansicht, jeweils nach einer Drehung um unterschiedliche Kippwinkel α aus einer ersten Winkelstellung in eine zweite Winkelstellung gekippt, dargestellt in den Figuren 4 und 5. Hierbei ist zu beachten, dass die erste Winkelstellung im Folgenden als eine Arbeitsposition des Tiegels festgelegt ist, bei der ein Drehwinkel um die Drehachse 5 0° beträgt. Wird der Tiegel 1' um den Kippwinkel α in eine zweite Winkelstellung verkippt, so entspricht gerade der Kippwinkel α der absoluten Winkelposition des Tiegels 1' relativ zu der Arbeitsposition.

Dabei ist:

$\alpha$ der Kippwinkel des Tiegels 1';
$\beta$ der Neigungswinkel des Ausgusses;
a die Breite des Tiegelbodens;
a' die Breite des Tiegelbodens die mit Tiegelinhalt bedeckt ist
b die Höhe des Tiegels 1';
c die Tiefe des Tiegels 1';
d die Differenz der Breite der Projektion des Tiegels 1' auf die Auflageebene, die durch die Breite a und die Tiefe c des Tiegels 1' in der ersten Winkelstellung bzw. Arbeitposition bei α = 0° gegeben ist; (die Arbeitsposition des Tiegels 1' ist in Figur 3 dargestellt) und der Breite des Tiegels 1' auf Höhe der Oberkante 50';
e der Abstand der Oberkante 50' zu der Auflageebene (wie bereits angeführt durch a, c in Figur 3 beschrieben);
f der Abstand einer Senkrechten zur Auflageebene über der Achse 5', um die der Tiegel 1' gekippt wird, und der Oberkante 50';
g die Länge einer Linie der geneigten Wand des Tiegels 1', die den Ausguss bildet, senkrecht auf der Achse 5' und der Oberkante 50';
h die Differenz zwischen der Breite der vorderen, bzw. hinteren Oberkante des Tiegels 1' und der Breite des Tiegelbodens a, die dadurch zustande kommt, dass der Ausguss um den Neigungswinkel β geneigt ist;
i die Höhe der linken unteren Kante 55' über der Auflageebene (a, c nach Figur 3);
1 die Breite der Projektion des Tiegelinhalts zwischen der Drehachse 5' und der linken unteren Kante 55' des Tiegels auf die Auflageebene (durch a, c in Figur 3 beschrieben);
x die Höhe des Füllstands liquiden Inhalts des Tiegels 1' in der Arbeitsposition (bei α = 0°); und
A die Querschnittsfläche des Tiegelinhalts bei einem senkrechten Schnitt parallel zur vorderen Wand des Tiegels 1'.

Das Volumen V des Tiegelinhalts ist durch A multipliziert mit c gegeben. Aufgrund der Geometrie des Tiegels 1' gilt nach der erfindungsgemäßen Erkenntnis:

$$A = \frac{V}{c} = l \cdot e - \frac{1}{2} \cdot (e - i) \cdot d - \frac{1}{2} \cdot l \cdot i + \frac{1}{2} \cdot e \cdot f \qquad \text{Gleichung (1),}$$

wobei V das Volumen des Tiegelinhalts ist.

Dabei gilt:

$$d = (e - i) \cdot \tan\alpha;$$

$$e = g \cdot \cos(\alpha + \beta);$$

$$f = g \cdot \sin(\alpha + \beta);$$

$$g = \frac{b}{\cos\beta};$$

$$h = b \cdot \tan \beta;$$

$$i = a \cdot \sin \alpha;$$

$$l = a \cdot \cos \alpha;$$

$$\beta = \arccos\left(\frac{b}{g}\right).$$

Wenn die Oberfläche des Tiegelinhalts die Kante 55' des Tiegels kreuzt, wie es in Figur 5 dargestellt ist, ändert sich aufgrund der bei einer fortgesetzten Kippbewegung nachfolgenden Reduzierung der Fläche des Bodens des Tiegels 1 ', die durch den Tiegelinhalt bedeckt ist, das Ausgussverhaltens des Tiegels 1' und lässt sich mit der folgenden Gleichung (2) beschreiben. Ab diesem Zeitpunkt gilt:

$$A = \frac{V}{c} = \frac{1}{2} \cdot l \cdot e + \frac{1}{2} \cdot e \cdot f \qquad \text{Gleichung (2)}.$$

Dabei gilt:

$$a' \le a;$$

$$a' = \frac{e}{\sin \alpha};$$

$$e = g \cdot \cos(\alpha + \beta);$$

$$l = \frac{e}{\tan \alpha};$$

$$f = g \cdot \sin(\alpha + \beta)$$

Die Gleichung zur Bestimmung des Volumens des Tiegelinhalts V während des Ausgießens lässt sich also auf die geometrischen Abmessungen des Tiegels a, b, c kombiniert mit g oder $\beta$ sowie den Kippwinkel $\alpha$ bei dieser Geometrie des Tiegels zurückführen. Andere Geometrien des Tiegels führen zu anderen Berechnungen und Formeln.
Der einzige Parameter, der sich während des Kippvorgangs verändert, ist der Drehwinkel des Tiegels 1' um die Drehachse 5, der hier aufgrund der Annahme einer Arbeitsposition mit einem absoluten Drehwinkel von 0° gleich dem Kippwinkel $\alpha$ ist. Der zeitliche Verlauf des Kippwinkels $\alpha$ bestimmt also den Volumenstrom des Tiegelinhalts aus dem Tiegel.
Diese Anschauungsbeispiele machen deutlich, dass es zu einer Veränderung des Volumenstroms in Abhängigkeit vom Kippwinkel $\alpha$, den Tiegelabmessungen a, b, c und der Ausgussgeometrie g, $\beta$ kommt.
Ab einem kritischen Drehwinkel des Tiegels 1' um die Drehachse 5', der einem Kippwinkel $\alpha_d$ entspricht, und

bei dem die Oberfläche des Tiegelinhalts 40 die Kante 55' des Tiegels 1' erreicht (dargestellt in Figur 5), ändert sich das Ausgussverhalten des Tiegels 1' sprunghaft. Dieser Veränderung kann durch eine geeignete Ansteuerung der Antriebseinrichtung, mit dem der Tiegel 1' um die Achse 5' geneigt wird, insbesondere eine Reduzierung der Winkelgeschwindigkeit des Kippwinkels $\alpha$ Rechnung getragen werden. Dadurch kann vermieden werden, dass es beim Überschreiten dieses kritischen Winkels $\alpha_d$, wie er sich in Figur 5 aus dem Winkel $\alpha$ ergibt, zu einer plötzlichen Veränderung des Volumenstroms, insbesondere einer Erhöhung, und dadurch beispielsweise zu einem Überschwappen des Tiegels 1' kommen kann.

Der Kippwinkel $\alpha_d$, bei dem die Oberfläche des Tiegelinhalts die linke untere Ecke 55' des Tiegels 1' während des Ausgießens erreicht, ist durch die folgende Gleichung beschrieben:

$$a \cdot \sin(\alpha) = g \cdot \cos(\alpha + \beta) = g \cdot \cos(\alpha) \cdot \cos(\beta) - g \cdot \sin(\alpha) \cdot \sin(\beta) \quad \Rightarrow$$

$$\frac{\cos(\alpha)}{\sin(\alpha)} = \cot(\alpha) = \frac{a}{g \cdot \cos(\beta)} + \frac{\sin(\beta)}{\cos(\beta)} = \frac{a}{g \cdot \cos(\beta)} + \tan(\beta) \quad \Rightarrow$$

$$\alpha = arc\cot\left(\frac{a}{g \cdot \cos(\beta)} + \tan(\beta)\right) := \alpha_1$$

Ab diesem kritischen Winkel $\alpha_d$ des Kippwinkels $\alpha$ ändert sich also das Ausgießverhalten sprunghaft. Demzufolge muss die Bewegung des Tiegels 1' angepasst werden, wenn ein konstanter Volumenstrom erreicht werden soll. Kurz vorher und kurz danach kann die Winkelgeschwindigkeit $\omega$ und/oder die Winkelbeschleunigung $\psi$ des Tiegels 1' um die Achse 5' bereits angepasst werden, um einen möglichst stetigen Übergang beim Durchlaufen des Winkels $\alpha_d$ zu erreichen. Als Beispiel sei hier ein Bereich von $\alpha_d + 3°$ bis $\alpha_d - 5°$ genannt. Um welches Maß und ab welchem Bereich um $\alpha_d$ herum die Winkelgeschwindigkeit $\omega$ und/oder die Winkelbeschleunigung $\psi$ angepasst werden müssen, hängt von der Trägheit des Systems Tiegel 1' und Tiegelinhalt, der Leistung der Antriebseinrichtung und von der Konsistenz des Tiegelinhalts ab. Je größer die Masse des Tiegels 1' und des Tiegelinhalts ist, desto früher muss die Winkelgeschwindigkeit $\omega$ des Tiegels 1' angepasst werden.

Der Tiegelinhalt beginnt aus dem Tiegel heraus zu fließen, wenn der Tiegel so weit geneigt ist, d. h. wenn der Kippwinkel $\alpha$ erreicht ist, bei dem das ursprüngliche Volumen des Tiegelinhalts gleich dem Volumen V nach Gleichung (1) ist. Dieser Winkel wird im Folgenden als Ausgusswinkel $\alpha_A$ bezeichnet und kann durch die Gleichungen (3) bestimmt werden.

$$V = c \cdot \left(l \cdot e - \frac{1}{2} \cdot (e - i) \cdot d - \frac{1}{2} \cdot l \cdot i + \frac{1}{2} \cdot e \cdot f\right) = c \cdot \left(a \cdot x + \frac{1}{2} \cdot \tan \beta \cdot x^2\right) \quad \Rightarrow$$

$$a \cdot g \cdot \cos \alpha_A \cos(\alpha_A + \beta) - \frac{1}{2} g^2 \cdot (\cos(\alpha_A + \beta))^2 \cdot \tan \alpha_A + a \cdot g \cdot \cos(\alpha_A + \beta) \cdot \sin \alpha_A \cdot \tan \alpha_A$$

$$- \frac{1}{2} a^2 \cdot (\sin \alpha_A)^2 \cdot \tan \alpha_A - \frac{1}{2} a^2 \sin \alpha_A \cdot \cos \alpha_A + \frac{1}{2} g^2 \sin(\alpha_A + \beta) \cdot \cos(\alpha_A + \beta) = a \cdot x + \frac{1}{2} \tan \beta \cdot x^2$$

Gleichung (3)

Aus der Höhe des Füllstands x, der Breite des Tiegelbodens a, der Länge des Ausgusses g und dem Neigungswinkel des Ausgusses $\beta$ kann also der Ausgusswinkel $\alpha_A$ errechnet werden. Für jede Erhöhung des Kippwinkels $\alpha$ über den Ausgusswinkel $\alpha_A$ wird ein Volumenstrom aus dem Tiegel fließen.

Alle in den Ausführungsbeispielen, d. h. alle bisher angegebenen Gleichungen, können auch als mathematische Näherungslösungen für ähnliche Tiegelgeometrien verwendet werden. Die angegebenen Formeln sind also in gewissem Umfang von den konkreten Ausführungsbeispielen unabhängig. D. h. für Tiegel mit grob rechteckiger Grundform und einem geneigten Ausguss können diese Formeln angewendet werden, auch wenn sie keine exakte Lösung der tatsächlichen mathematischen Beschreibung der Tiegel- und/oder Ausgussgeometrie darstellen. Der Ausguss kann beispielsweise nur einen Teil einer Seitenwand einnehmen. Auch ist es möglich empirisch bestimmte Korrekturfaktoren in die angegebenen Gleichungen einfließen zu lassen, um die Gleichungen zur Beschreibung der realen Tiegel- und Ausgussgeometrie anzupassen.

Das aus dem Tiegel fließende Volumen ergibt sich aus der Zeitabhängigkeit des Kippwinkels $\alpha$. Für jedes Erhöhen des Kippwinkels $\alpha$ über den Ausgusswinkel $\alpha_A$ hinaus gilt also, dass sich das ausfließende Volumen Tiegelinhalts pro Winkelgrad Kippwinkel $\alpha$ aus der Differenz der Volumina nach Gleichung (1) oder (2) für eine Kippwinkeldifferenz $\Delta\alpha$ von 1° berechnet. Bei einer gleichmäßigen Winkelgeschwindigkeit $\omega$ von beispielsweise 1° pro Sekunde ergibt sich daraus das ausfließende Volumen Tiegelinhalts pro Sekunde, also der Volumenstrom des Tiegelinhalts aus dem Tiegel heraus.

Ändert sich der Kippwinkel $\alpha$, die Winkelgeschwindigkeit $\omega$ oder die Winkelbeschleunigung $\psi$ über die Zeit, können einfach die Ableitungen des Kippwinkels $\alpha$ nach der Zeit bestimmt und daraus der Volumenstrom des Tiegelinhalts berechnet werden. Dabei gilt:

$$\omega = \frac{d\alpha}{dt};$$

$$\psi = \frac{d\omega}{dt} = \frac{d^2\alpha}{dt^2}$$

Durch die differenzielle Berechnung der Winkelgeschwindigkeit $\omega$ nach den Gleichungen (1) oder (2) kann der Volumenstrom berechnet werden. Bei einer experimentellen Bestimmung des Volumenstroms wird die Winkelgeschwindigkeit $\omega$ und damit der Volumenstrom des Tiegelinhalts durch einen Differenzenquotienten bestimmt.

Ein Verlauf für die Winkelgeschwindigkeit $\omega$ des Kippwinkels $\alpha$ in Abhängigkeit der Winkelstellung des Tiegels 1', der gerade dem der Kippwinkel $\alpha$ entspricht, ist in einem Diagramm in Figur 6 dargestellt. Hierbei erfolgt eine Bewegung des Tiegels 1' von der ersten Winkelstellung, die der Arbeitsposition entspricht, in eine zweite Winkelstellung, die einer maximalen Kippung des Tiegels 1' entspricht. Die Winkelgeschwindigkeit $\omega$ der Drehung um die Drehachse 5' des Tiegels 1' wird zunächst kontinuierlich von 0° pro Sekunde auf 15° pro Sekunde bis zu einem Kippwinkel $\alpha$ von knapp 10° erhöht. Anschließend wird bis zum einem Kippwinkel $\alpha$ von 65° die Winkelgeschwindigkeit $\omega$ bei 15° pro Sekunde belassen. Ab einem Kippwinkel $\alpha$ von 65° wird bis zum Kippwinkel von 90°, d. h. dem völligen Entleeren des Tiegel, die Winkelgeschwindigkeit $\omega$ von 15° pro Sekunde auf 0° pro Sekunde abgebremst.

Dieses Beispiel für ein Auskippen des Tiegels wäre beispielsweise für einen leeren Tiegel geeignet, der komplett gekippt werden soll. Der Tiegel befindet sich, wie zuvor beschrieben, zunächst in einer Arbeitsposition, d. h. der Kippwinkel $\alpha$ beträgt zunächst 0°. Der Füllstand im Tiegel ist ebenso bekannt, wie die Masse des Tiegelinhalts und die Tiegelabmessungen inklusive der Ausgussgeometrie.

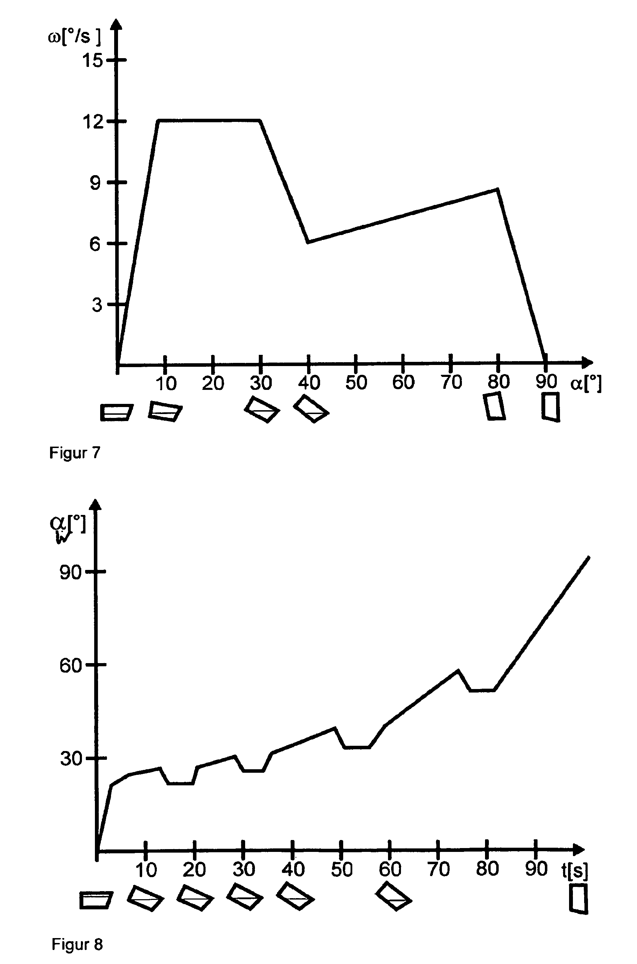

Die Diagramme nach Figur 6 und den folgenden Figuren 7 und 8 sind so zu verstehen, dass Soll-Werte für die Winkelgeschwindigkeit $\omega$ und den Kippwinkel $\alpha$ aufgetragen sind. Die IstWerte des Kippwinkels $\alpha$ können je nach Trägheit des Systems Tiegel und Tiegelinhalt und je nach Leistung der Antriebseinrichtung zum Kippen des Tiegels abweichen.

Ein weiteres Ausführungsbeispiel, bei dem das Verfahren anhand eines Kippvorgangs erläutert wird, ist in Figur 7 dargestellt. Dort ist in einem Diagramm die Winkelgeschwindigkeit $\omega$ gegen den Kippwinkel $\alpha$ des Tiegels aufgetragen. Bei dem dargestellten Beispiel wird beispielsweise heißes Frittieröl aus dem Tiegel gekippt.

Der Tiegel befindet sich zunächst in einer Arbeitsposition, d. h. die erste Winkelstellung entspricht einem absoluten Kippwinkel von 0° und somit gilt, dass der Kippwinkel $\alpha$ ebenfalls zunächst 0° beträgt. Der Füllstand im Tiegel und/oder die Massen des Tiegels und des Tiegelinhalts sind bekannt. Die Tiegelabmessungen sind ebenso bekannt, wie die Ausgussgeometrie.

Beispielsweise ist durch die Einstellung der Betriebsart "Frittieren" Frittieröl als Tiegelinhalt bekannt. Durch Messung ist auch die Temperatur des Tiegelinhalts bekannt.

Figur 7 zeigt hierzu ein Diagramm, in dem ein Verlauf der Winkelgeschwindigkeit $\omega$ des Kippwinkels $\alpha$ in Abhängigkeit von der Winkelstellung, die gerade dem Kippwinkel $\alpha$ entspricht, wie er sich aus einem erfindungsgemäßen Verfahren ergibt, dargestellt ist. Für die Kippwinkel 0°, 10°. 30°, 40°, 80° und 90° sind unterhalb der Beschriftung der Abszisse kleine schematische Tiegel, teilweise mit Füllung, um die jeweiligen Kippwinkeln $\alpha$ gekippt, gezeigt. Die schematischen Tiegel sind ähnlich dem in den Figuren 3, 4 und 5 dargestellten Tiegel 1'.

Zu Beginn des Kippvorgangs wird die Winkelgeschwindigkeit $\omega$ möglichst schnell erhöht. Bis zu einem Kippwinkel $\alpha$ von circa 9° wird der Tiegel mit maximaler Winkelbeschleunigung $\psi$ bis zu einer maximalen Winkelgeschwindigkeit ω von 12° pro Sekunde beschleunigt. Diese maximale Winkelgeschwindigkeit ω von 12° pro Sekunde wird bis zum Erreichen eines Kippwinkels α von 30° beibehalten. Aufgrund der geringen Füllhöhe des Inhalts wird bei dieser Bewegung der kritische Winkel $\alpha_d$ durchfahren, bevor der Ausgusswinkel $\alpha_A$ erreicht ist. Dies zeigt, dass eine Anpassung der Kippbewegung vor Erreichen des kritischen Winkels $\alpha_d$ insbesondere dann erfolgt, wenn der Ausgusswinkel $\alpha_A$ bei einer Kippbewegung aus der Arbeitsposition vor dem kritischen Winkel $\alpha_d$ erreicht ist, also bei Erreichen des kritischen Winkels bereits ein Ausgießen erfolgt. Ab diesem Kippwinkel wird ab einer Winkelposition von 10° vor Erreichen des Ausgusswinkels (40°) die Winkelgeschwindigkeit ω kontinuierlich reduziert, bis eine Winkelgeschwindigkeit ω von 6° pro Sekunde erreicht wird.

Die Steuerung des Gargeräts, insbesondere die Regel- und/oder Steuereinrichtung, berechnet aus der Geometrie des Tiegels und des Ausgusses sowie der Höhe des Füllstands und dem Kippwinkel α, bei dem der Tiegelinhalt beim Kippen des Tiegels über die Ausgussgeometrie auszutreten beginnt, also den Ausgusswinkel $\alpha_A$, wie beispielsweise in Figur 4 dargestellt.

Bei der Berechnung des Ausgusswinkels $\alpha_A$ kann bei passender Geometrie des Tiegels auf die Gleichungen zu Figur 5 (Gleichung (3)) zurückgegriffen werden oder der Ausgusswinkel $\alpha_A$ wird für verschiedene Füllstände empirisch bestimmt. Bereits 10° vor Erreichen des Ausgusswinkels $\alpha_A$. im Beispiel nach Figur 7 sei der Ausgusswinkel $\alpha_A$ bei einem Kippwinkel α von 40° erreicht, also beispielsweise bei einem Kippwinkel von 30°, wird die Winkelgeschwindigkeit ω des Tiegels kontinuierlich bis zum Erreichen des Ausgusswinkels $\alpha_A$ bei 40° reduziert. Beim Erreichen des Ausgusswinkels $\alpha_A$ beträgt die Winkelgeschwindigkeit ω nur noch 6° pro Sekunde. Beim anschließenden Ausgießen des Tiegels wird die Winkelgeschwindigkeit ω von 6° pro Sekunde kontinuierlich auf 9° pro Sekunde erhöht. Die Winkelgeschwindigkeit ω von 9° pro Sekunde wird bei einem Kippwinkel α von 80° erreicht. Anschließend wird der Tiegel für die letzten 10° bis zum maximalen Kippwinkel (hier 90°) mit einer maximalen negativen Winkelbeschleunigung ψ, also mit maximaler Abbremsrate abgebremst. Schließlich kommt der Tiegel bei einem Kippwinkel α von 90° zum Stehen.

Durch diese Bewegung des Tiegels ist ein sicheres Ausgießen aus dem Tiegel möglich und es findet ein kontinuierlicher Ausfluss des maximal möglichen Volumens in kürzest möglicher Zeit statt.

Figur 8 zeigt ein Diagramm, in dem die Winkelstellung $\alpha_w$ über die Zeit für eine andere Bewegung des Tiegels, die aus einem erfindungsgemäßen Verfahren resultiert, aufgetragen ist. Ziel ist es hierbei, den Volumenstrom des Tiegelinhalts einerseits konstant zu halten und andererseits den Tiegelinhalt beim Ausgießen in fünf Portionen aufzuteilen. Durch die Bestimmung des Volumenstroms kann also auch eine Dosierbarkeit des Tiegelinhalts erreicht werden.

Der Anwender kann also beispielsweise ein bestimmtes Volumen auswählen, wobei das Gargerät den Kippvorgang automatisch stoppt, wenn das entsprechende Volumen aus dem Tiegel entleert wurde. Dies ist beispielsweise dann sinnvoll, wenn mehrere Behälter mit einem bestimmten Volumen befüllt werden müssen oder nur eine maximale Befüllmenge der Behälter möglich ist, die geringer als die Füllmenge des Tiegelinhalts ist.

So kann beispielsweise Pudding aus einem Tiegel mit 150 Litern Nutzfüllmenge, der mit 100 Liter Pudding befüllt ist, in Portionen zu je 20 Litern abgefüllt werden. Für die Bewegung des Tiegels, d. h. die Abhängigkeit des Kippwinkels α von der Zeit, ergibt sich dann, dass die Abfüllung in fünf-20-Liter-Schritte unterteilt ist.

Zunächst wird der gefüllte Tiegel, ausgehend von einer ersten Winkelstellung, die der Arbeitsposition entspricht, in eine zweite Winkelstellung, bei der gerade die gewünschte Menge an Inhalt ausgegossen ist, bewegt. Diese Bewegung erfolgt zunächst bei maximaler Winkelgeschwindigkeit ω bis kurz vor-Erreichen des Ausgusswinkels $\alpha_A$ und zwar bis zu einer Winkelstellung von 26°. Nach drei Sekunden wird der Soll-Wert für die Winkelgeschwindigkeit ω reduziert, um ein Überschwappen des Tiegelinhalts zu verhindern. Bei Erreichen des Ausgusswinkels von 27°, nach acht Sekunden, wird der Soll-Wert für die Winkelgeschwindigkeit ω ein weiteres Mal reduziert, um ein kontinuierliches Ausgießen aus dem Tiegel zu ermöglichen. Aufgrund des bekannten Füllstands der bekannten Dichte und/oder Viskosität des Tiegelinhalts und der bekannten Geometrie des Tiegels und des Ausgusses des Tiegels kann die Steuerungseinrichtung des Gargeräts, das aus dem Tiegel ausgekippte Volumen des Tiegelinhalts berechnen.

Alternativ dazu kann die Menge des ausgeleerten Tiegelinhalts auch durch Messen einer Gewichtsdifferenz bestimmt werden, oder die Füllstandshöhe im Tiegel kontinuierlich gemessen werden. Nach 13 Sekunden und bei Erreichen der zweiten Winkelstellung von 28° ist die erste 20-Liter-Portion aus dem Tiegel entleert. Der Tiegel wird anschließend auf eine Winkelstellung von 25° zurückgedreht, also ein negativer Kippwinkel α gewählt. Danach verharrt der Tiegel für fünf Sekunden bei einer Kippwinkelposition von 25°, um die Bewegung des Tiegelinhalts im Tiegel abklingen zu lassen. Zusätzlich soll diese Zeit dem Anwender des Gargeräts ermöglichen, das nächste leere Gefäß, in das der Tiegelinhalt gefüllt werden soll, zu holen und unter dem Ausguss des Tiegels zu positionieren. Diese Winkelstellung von 25° stellt eine neue erste Winkelstellung dar und ausgehend von dieser wird ein neuer Ausgusswinkel $\alpha_A$, der kritische Winkel $\alpha_d$ und eine neue zweite Winkelstellung berechnet. Dann wird der Tiegel wieder mit gesteigerter Winkelgeschwindigkeit ω bis zu einer Winkelstellung von 28° gekippt und anschließend die zweite Portion durch langsames Kippen des Tiegels bis zu der neuen zweiten Winkelstellung von 31° nach 28 Sekunden aus dem Tiegel ausgeleert. Anschließend wird die Winkelstellung wieder auf 28° reduziert und dort für circa fünf Sekunden gehalten.

Ebenso ist es möglich, dass der Tiegel in dieser Ruheposition verharrt, bis der Anwender eine Eingabe an einer Eingabeeinrichtung des Gargeräts tätigt, die dazu führt, dass der nächste Kippvorgang gestartet wird. Nach einer

**EP 2 301 392 B1**

Zeit von 35 Sekunden betätigt im vorliegenden Beispiel der Anwender des Gargeräts die Eingabeeinrichtung des Gargeräts indem er z. B. auf einer Eingabeeinrichtung, insbesondere einem Touchscreen, eine Taste mit der Beschriftung "nächste Ladung", "dritte Ladung" oder "dritte von fünf Ladungen" aktiviert. Nach Betätigen der Taste wird die Kippung des Tiegels ausgehend von der neuen ersten Winkeleinstellung von 28° in eine neue zweite Winkelstellung 40°, bis zu der die vorgegebene Menge an Tiegelinhalt ausgegossen ist, bestimmt, und der Tiegel zunächst mit großer Winkelgeschwindigkeit $\omega$ bis zu einer Winkelstellung $\alpha_w$ von 31° gekippt. Ab diesem Moment beginnt wieder Tiegelinhalt aus dem Tiegel auszuströmen. Der Tiegel wird dann langsamer bis zum Erreichen einer Winkelstellung $\alpha_w$ von 40° gekippt.

Die größere Kippwinkeldifferenz bei der dritten Ladung resultiert daraus, dass bei der Bewegung der kritische Winkel $\alpha_d$ überschritten wird, und zwar gleichzeitig mit Erreichen des Ausgusswinkels $\alpha_A$ für diese Ladung, und sich so aufgrund der Geometrie des Tiegels das ausgeleerte Volumen pro Grad Kippwinkel $\alpha$ mit steigendem Kippwinkel $\alpha$ reduziert. Dementsprechend wird die dritte Ladung über einen größeren Kippwinkelbereich $\alpha$ ausgekippt. In diesem Fall wird also gerade der kritische Winkel $\alpha_d$ gleichzeitig mit Erreichen des Ausgusswinkels $\alpha_A$ erreicht. Wäre dies nicht der Fall, würde, wie bereits anhand der Figur 7 beschrieben, die Winkelgeschwindigkeit sowohl vor Erreichen des Ausgusswinkels $\alpha_A$ reduziert, um ein Überschießen des Tiegelinhalts aus dem Tiegel und somit ein Überschwappen zu vermeiden und auch eine Anpassung der Winkelgeschwindigkeit durch Erhöhung oder Reduzierung, je nach Tiegelgeometrie, bei Erreichen des kritischen Winkels vorgenommen, um eine schlagartige Erhöhung bzw. Reduzierung des Ausgussvolumens zu vermeiden, um ein kontinuierliches, größtmögliches Ausgussvolumen zu erreichen.

Das nachfolgende Auskippen über einen längeren Zeitraum kann aufgrund der Tiegelgeometrie notwendig sein. Das Auskippen der vierten Ladung zwischen 56 Sekunden und 74 Sekunden wird zudem mit einer höheren Winkelgeschwindigkeit $\omega$ durchgeführt. Für die letzte Ladung kann die größte Winkelgeschwindigkeit verwendet werden. Der Tiegel ist schon vor Erreichen einer Winkelstellung von 90°, abhängig von der Neigung $\beta$ des Ausflusses, vollständig entleert.

Die in der vorstehenden Beschreibung, den Ansprüchen und den Zeichnungen offenbarten Merkmale können sowohl einzeln, als auch in jeder beliebigen Kombination für die Verwirklichung der Erfindung in ihren verschiedenen Ausgestaltungen von Bedeutung sein.

**Bezugszeichenliste**

| | |
|---|---|
| 1.1' | Tiegel |
| 5,5' | Drehachse |
| 10 | Motor |
| 15 | Tiegelboden |
| 20 | Thermoelement |
| 25 | Sensor |
| 30 | Masseerkennungssensor |
| 35 | Steuerungseinrichtung |
| 40, 40' | Tiegelinhalt |
| 50' | Oberkante |
| 55' | Kante |

| | |
|---|---|
| $\alpha$ | Kippwinkel |
| $\beta$ | Neigungswinkel |
| a | Breite |
| a' | Breite |
| b | Höhe |
| c | Tiefe |
| d | Differenz |
| e | Abstand |
| f | Abstand |
| g | Abstand |
| h | Abstand |
| i | Höhe |
| l | Breite |
| x | Höhe |
| A | Querschnittsfläche |

$\alpha_d$    kritischer Drehwinkel
$\alpha_A$    Ausgusswinkel
$\alpha_w$    Winkelstellung

**Patentansprüche**

1.  Verfahren zum Steuern oder Regeln einer Bewegung zum Ausgießen eines liquiden Inhalts (40, 40') aus einem Tiegel (1, 1') eines Gargeräts, wobei zum Ausgießen des liquiden Inhalts (40, 40') der Tiegel (1, 1') mittels zumindest einer Antriebseinrichtung (10) aus einer ersten Winkelstellung ($\alpha_w$) um einen Kippwinkel $\alpha$ in eine zweite Winkelstellung ($\alpha_w$) gekippt wird und die erste und die zweite Winkelstellung von zumindest einer Regel- und/oder Steuerungseinrichtung (35) des Gargeräts eingestellt wird, **gekennzeichnet durch** den Verfahrensschritt:

    Bestimmen des Kippwinkels $\alpha$, zumindest einer ersten Ableitung des Kippwinkels $\alpha$ und/oder zumindest einer zweiten Ableitung des Kippwinkels $\alpha$ basierend auf zumindest einer geometrischen Abmessung ($\beta$, a, b, c, h, V) des Tiegels (1,1').

2.  Verfahren nach Anspruch 1, **dadurch gekennzeichnet, dass**
    das Verfahren das Regeln und/oder Steuern des Kippens von der ersten Winkelstellung ($\alpha_w$) in die zweite Winkelstellung ($\alpha_w$) mittels der Regel- und/oder Steuereinrichtung (35) basierend auf dem bestimmten Kippwinkel $\alpha$, der ersten Ableitung und/oder der zweiten Ableitung umfasst,
    vorzugsweise mittels der Regel- und/oder Steuereinrichtung (35), als die erste Ableitung der Kippwinkel $\alpha$ nach der Zeit abgeleitet wird, insbesondere als die erste Ableitung eine Winkelgeschwindigkeit $\omega$ des Kippwinkels $\alpha$ bestimmt wird und/oder als die zweite Ableitung der Kippwinkel $\alpha$ zweifach nach der Zeit abgeleitet wird, insbesondere als die zweite Ableitung eine Winkelbeschleunigung $\psi$ des Kippwinkels $\alpha$ bestimmt wird, und/oder der liquide Inhalt über zumindest einen Ausguss des Tiegels (1, 1') ausgegossen, insbesondere durch den Ausguss kanalisiert und/oder geleitet wird.

3.  Verfahren nach Anspruch 1 oder 2, **dadurch gekennzeichnet, dass** als geometrische Abmessung des Tiegels (1, 1') zumindest eine Breite (a), eine Höhe (b), eine Tiefe (c), ein Neigungswinkel ($\beta$), insbesondere zumindest einer Wand, eine Querschnittsform, eine Umfangsform, zumindest eine Größe und/oder Neigung einer Bodenfläche, zumindest eine Umfangslänge, zumindest ein Fassungsvolumen (V) und/oder zumindest eine Normgröße des Ausgusses und/oder des Tiegels (1, 1') verwendet und/oder bestimmt wird bzw. werden.

4.  Verfahren nach einem der vorangehenden Ansprüche, **dadurch gekennzeichnet, dass** die erste Winkelstellung ($\alpha_w$), die zweite Winkelstellung ($\alpha_w$), der Kippwinkel $\alpha$, die erste Ableitung des Kippwinkels $\alpha$ und/oder die zweite Ableitung des Kippwinkels $\alpha$ basierend auf zumindest einem Füllstand (x) des liquiden Inhalts (40, 40') in dem Tiegel (1, 1') und/oder zumindest einer Dichte und/oder Viskosität des liquiden Inhalts (40, 40') des Tiegels (1, 1') bestimmt wird, wobei vorzugsweise der Füllstand (x) mittels zumindest eines, insbesondere mit zumindest einer Wand des Tiegels (1, 1') in Wirkverbindung stehenden, ersten Sensors (25) gemessen wird, vorzugsweise der Füllstand (x) kontinuierlich und/oder unter Einsatz elektromagnetischer, optischer und/oder akustischer Strahlung, wie Ultraschallstrahlung, Infrarotstrahlung, Radarstrahlung, Mikrowellenstrahlung, Laserstrahlung, und/oder Lichtstrahlung, und/oder mittels zumindest eines Thermoelementes (20), vorzugsweise, insbesondere mittels eines Zeitgebers, in Abhängigkeit von einem zeitlichen Verlauf eines Temperatursignals des Thermoelements (20), kapazitiv und/oder mittels einer Vielzahl von ersten Sensoren (25) gemessen wird.

5.  Verfahren nach einem der vorangehenden Ansprüche, **dadurch gekennzeichnet, dass** die erste Winkelstellung ($\alpha_w$), die zweite Winkelstellung ($\alpha_w$), der Kippwinkel $\alpha$, die erste Ableitung des Kippwinkels $\alpha$ und/oder die zweite Ableitung des Kippwinkels $\alpha$ basierend auf einer ersten Masse des Tiegels (1, 1') und/oder einer zweiten Masse des liquiden Inhalts (40, 40') bestimmt wird, wobei vorzugsweise die erste Masse und/oder die zweite Masse kontinuierlich und/oder in zumindest einer Arbeitsposition, die insbesondere durch eine Winkelstellung ($\alpha_w$) von 0° definiert ist, und/oder mittels zumindest eines zweiten Sensors (30), insbesondere umfassend zumindest einen, vorzugsweise mit der Antriebseinrichtung (10) und/oder dem Tiegel (1, 1') in Wirkverbindung stehenden, Kraftsensor, einen Drehmomentsensor, einen Momentsensor und/oder einen Dehnungsmessstreifen, vorzugsweise mit zumindest einer Kraftmessdose, bestimmt wird.

6.  Verfahren nach einem der vorangehenden Ansprüche, **dadurch gekennzeichnet, dass** die geometrische Abmessung ($\beta$, a, b, c, h, V), eine Art des liquiden Inhalts (40, 40'), die Viskosität und/oder die Dichte, der Füllstand (x), die erste Masse und/oder die zweite Masse basierend auf einer Auswahl und/oder Bestimmung einer Betriebsart des Gargeräts, eines Reinigungsprogramms, eines Garprogramms, eines Garprozesses, einer Gargutart und/oder einer Art eines Garmediums und/oder Reinigungsmediums, basierend auf einem durch das Gargerät, insbesondere die Regel- und/oder Steuereinrichtung (35), gesteuerten Befüllen des Tiegels (1, 1') mit einem Gar- oder Reinigungsmedium und/oder basierend auf einer von einem Benutzer des Gargeräts vorgenommenen Vorgabe bestimmt wird bzw. werden und/oder basierend auf zumindest einer Einstellung des Benutzers mittels einer, insbesondere eine Benutzeroberfläche darbietende, Eingabeeinrichtung des Gargeräts bestimmt wird, wobei vorzugsweise zur Bestimmung der geometrischen Abmessung ($\beta$, a, b, c, h, V), der Art des liquiden Inhalts (40, 40'), der Viskosität und/oder der Dichte, des Füllstands (x), der ersten Masse und/oder der zweiten Masse eine Vielzahl von Betriebsarten des Gargeräts, von Tiegelnormgrößen, von Tiegelgrößen, von Tiegelvolumina, von Reinigungsprogrammen, von Garprogrammen, von Garprozessen, von Gargutartarten und/oder Arten des Garmediums und/oder Reinigungsmediums, insbesondere Gargutartarten und/oder Arten des Garmediums und/oder Reinigungsmediums mit vergleichbaren Dichten und/oder Viskositäten, in Gruppen zusammengefasst und/oder geclustert werden.

7. Verfahren nach einem der vorangehenden Ansprüche, **dadurch gekennzeichnet, dass** die Dichte des liquiden Inhalts (40, 40'), insbesondere mittels der Regel- und/oder Steuereinrichtung (35), aus dem Füllstand (x) und/oder einem, insbesondere mittels der geometrischen Abmessung und/oder dem Füllstand (x) bestimmten, Volumen des liquiden Inhalts (40, 40') und der ersten Masse bestimmt wird und/oder die Viskosität und/oder zumindest eine weitere Eigenschaften des liquiden Inhalts (40, 40') durch eine Frequenz, eine Amplitude und/oder ein Abklingverhalten einer Masseschwingung des liquiden Inhalts (40, 40'), insbesondere resultierend aus und/oder zeitlich nach einer vordefinierten Winkelbeschleunigung $\psi_d$ bestimmt wird.

8. Verfahren nach einem der vorangehenden Ansprüche, **dadurch gekennzeichnet, dass**, vorzugsweise mittels der Regel- und/oder Steuereinrichtung (35), die erste Ableitung und/oder die zweite Ableitung umgekehrt proportional, reziprok proportional, antiproportional und/oder indirekt proportional zu dem Füllstand (x), der ersten Masse, der Dichte und/oder der Viskosität bestimmt wird, bei der Bestimmung der ersten Winkelstellung ($\alpha_w$), der zweiten Winkelstellung ($\alpha_w$), des Kippwinkels $\alpha$, der ersten Ableitung und/oder der zweiten Ableitung bestehende Arbeitssicherheitsnormen berücksichtigt werden, die erste Winkelstellung ($\alpha_w$), die zweite Winkelstellung ($\alpha_w$), der Kippwinkel $\alpha$, die erste Ableitung und/oder die zweite Ableitung stufenlos eingestellt wird bzw. werden und/oder die erste Winkelstellung ($\alpha_w$), die zweite Winkelstellung ($\alpha_w$), der Kippwinkel $\alpha$, die erste Ableitung und/oder die zweite Ableitung, insbesondere kontinuierlich und/oder mittels zumindest eines dritten Sensors, gemessen wird.

9. Verfahren nach einem der vorangehenden Ansprüche, **dadurch gekennzeichnet, dass** zum Bestimmen der ersten Winkelstellung ($\alpha_w$), der zweiten Winkelstellung ($\alpha_w$), des Kippwinkels $\alpha$, der ersten Ableitung des Kippwinkels $\alpha$ und/oder der zweiten Ableitung des Kippwinkels $\alpha$ in zumindest einer Tabelle und/oder in einem Speicher des Gargeräts hinterlegte, vorzugsweise zuvor empirisch bestimmte, Werte verwendet werden und/oder mathematische Verfahren verwendet werden.

10. Verfahren nach einem der vorangehenden Ansprüche, **dadurch gekennzeichnet, dass** zum Bestimmen der zweiten Winkelstellung ($\alpha_w$), des Kippwinkels $\alpha$, der ersten Ableitung des Kippwinkels $\alpha$ und/oder der zweiten Ableitung des Kippwinkels $\alpha$ ein Ausgusswinkel ($\alpha_A$), insbesondere eine zweite Winkelstellung, bei dem bei einer Veränderung eine Winkelposition des Tiegels (1, 1'), vorzugsweise einer Veränderung aus der Arbeitsposition, der liquide Inhalt (40, 40') beginnt aus dem Tiegel, insbesondere über den Ausguss, auszutreten, bestimmt wird, ein kritischer Drehwinkel ($\alpha_d$) des Tiegels 1' bestimmt wird, bei dem sich insbesondere ein Bedeckungsgrad eines Tiegelbodens (15) mit dem liquiden Inhalt (40, 40') reduziert, bestimmt wird und/oder der Kippwinkel $\alpha$, die erste Ableitung des Kippwinkels $\alpha$ und/oder die zweite Ableitung des Kippwinkels $\alpha$ basierend auf der ersten Winkelstellung ($\alpha_w$) und/oder zweiten Winkelstellung ($\alpha_w$) bestimmt wird bzw. werden, insbesondere ein maximal erlaubter Wert der ersten Ableitung reduziert wird, wenn die zweite Winkelstellung ($\alpha_w$) größer als ein, insbesondere in Abhängigkeit von einer maximalen zweiten Winkelstellung ($\alpha_w$), bestimmter, vorgegebener Wert ist und/oder ein Differenz zwischen der ersten Winkelstellung ($\alpha_w$) und dem Ausgusswinkel ($\alpha_A$) geringer als ein vorgegebener Wert ist.

11. Verfahren nach Anspruch 10, **dadurch gekennzeichnet, dass**
der Kippwinkel $\alpha$, die erste Ableitung des Kippwinkels $\alpha$ und/oder die zweite Ableitung des Kippwinkels $\alpha$ in einem Winkelbereich zwischen der Arbeitsposition und dem Ausgusswinkel ($\alpha_A$) und/oder dem kritischen Drehwinkel ($\alpha_d$) im Wesentlichen unabhängig von einem vorgegebenen Wert für ein Ausgussvolumen und/oder eine Ausgussgeschwindigkeit des liquiden Inhalts (40, 40') aus dem Tiegel (1, 1') bestimmt
wird, insbesondere im wesentlichen ausschließlich basierend auf der Dichte, der Viskosität, dem Füllstand (x), der ersten Masse, und/oder der zweiten Masse, und/oder die erste Ableitung des Kippwinkels $\alpha$ vor Erreichen des

kritischen Drehwinkels ($\alpha_d$) reduziert wird, vorzugsweise um eine Wellenbewegung und/oder ein Austreten des liquiden Inhalts (40, 40') zu vermeiden, insbesondere im Bereich des Ausgusses und/oder außerhalb des Ausgusses, zu vermeiden.

12. Verfahren nach Anspruch 10 oder 11, **dadurch gekennzeichnet, dass** der Kippwinkel $\alpha$, die erste Ableitung des Kippwinkels $\alpha$ und/oder die zweite Ableitung des Kippwinkels $\alpha$ in einem Winkelbereich zwischen dem Ausgusswinkel ($\alpha_A$) und der maximalen zweiten Winkelstellung zumindest zusätzlich in Abhängigkeit von einem vorgegebenen Wert für ein Ausgussvolumen und/oder eine Ausgussgeschwindigkeit des liquiden Inhalts (40, 40') aus dem Tiegel (1, 1') bestimmt wird, insbesondere um einen kontinuierlichen Ausfluss des maximal möglichen Volumens des liquiden Inhalts (40, 40') in einer minimalen Zeitspanne zu erreichen.

13. Verfahren nach einem der vorangehenden Ansprüche, **dadurch gekennzeichnet, dass** die zweite Winkelstellung ($\alpha_w$) in Abhängigkeit von einem Volumen des liquiden Inhalts (40, 40') des Tiegels (1, 1'), der aus dem Tiegel (1, 1') ausgegossen werden soll, bestimmt wird, insbesondere ein Kippbewegung des Tiegels (1, 1') bei Erreichen der zweiten Winkelstellung gestoppt und/oder reversiert wird, insbesondere durch Reduzierung der ersten Ableitung von einem positiven Wert auf Null oder einen negativen Wert, wobei vorzugsweise nach Erreichen der zweiten Winkelstellung ($\alpha_w$) der Ausgusswinkel ($\alpha_A$) erneut bestimmt wird und/oder die Kippbewegung, insbesondere durch Bestimmung einer neuen zweiten Winkelstellung ($\alpha_w$) in Abhängigkeit von dem Volumen des liquiden Inhalts (40, 40') des Tiegels (1, 1'), der aus dem Tiegel (1, 1') ausgegossen werden soll, mit einer positiven ersten Ableitung fortgeführt wird.

## Claims

1. A method for controlling or regulating a movement for pouring a liquid content (40, 40') from a pan (1, 1') of a cooking device, wherein for pouring the liquid content (40, 40') the pan (1, 1') is tilted by a tilting angle $\alpha$ from a first angular position ($\alpha_w$) to a second angular position ($\alpha_w$) by means of at least one driving device (10) and the first and the second angular position are adjusted by at least one regulating and/or control device (35) of the cooking device, **characterized by** the method step of:

   determining the tilting angle $\alpha$, at least one first derivative of the tilting angle $\alpha$ and/or at least one second derivative of the tilting angle $\alpha$ based on at least one geometric dimension ($\beta$, a, b, c, h, V) of the pan (1, 1').

2. A method according to claim 1, **characterized in that**
   the method comprises regulating and/or controlling the tilting from the first angular position ($\alpha_w$) to the second angular position ($\alpha_w$) by means of the regulating and/or control device (35) based on the determined tilting angle $\alpha$,
   the first derivative and/or the second derivative,
   preferably by means of the regulating and/or control device (35), the tilting angle $\alpha$ is derived with respect to time as the first derivative, in particular an angular velocity $\omega$ of the tilting angle $\alpha$ is determined as the first derivative,
   and/or the tilting angle $\alpha$ is derived twice with respect to time as the second derivative, in particular an angular acceleration $\psi$ of the tilting angle $\alpha$ is determined as the second derivative, and/or the liquid content is poured via at least one outlet of the pan (1, 1'), particularly channeled and/or guided through the outlet.

3. A method according to claim 1 or 2, **characterized in that**
   as the geometric dimension of the pan (1, 1') at least one width (a), one height (b), one depth (c), one inclination angle ($\beta$), in particular of at least one wall,
   one cross-sectional shape, one peripheral shape, at least one size and/or
   inclination of a bottom surface, at least one circumferential length, at least one volumetric capacity (V) and/or at least one standard size of the outlet and/or
   the pan (1, 1') is or are used and/or determined.

4. A method according to any one of the preceding claims, **characterized in that** the first angular position ($\alpha_w$), the second angular position ($\alpha_w$), the tilting angle $\alpha$, the first derivative of the tilting angle $\alpha$ and/or the second derivative of the tilting angle $\alpha$ is determined based on at least one level (x) of the liquid content (40, 40') in the pan (1, 1') and/or at least one density and/or viscosity of the liquid content (40, 40') of the pan (1, 1'), wherein preferably the level (x) is measured by means of at least one first sensor (25) which in particular is in operative connection with at least one wall of the pan (1, 1'), preferably the level (x) is measured continuously and/or using electromagnetic, optical and/or acoustic radiation, such as ultrasonic radiation, infrared radiation, radar radiation, microwave radiation, laser radiation, and/or light radiation, and/or by means of at least one thermocouple (20), preferably in particular by means of a timer, as a function of the progression of a temperature signal of the thermocouple (20) over time, capacitively and/or by means of a plurality of first sensors (25).

5. A method according to any one of the preceding claims, **characterized in that** the first angular position ($\alpha_w$), the second angular position ($\alpha_w$), the tilting angle $\alpha$, the first derivative of the tilting angle $\alpha$ and/or the second derivative of the tilting angle $\alpha$ is determined based on a first mass of the pan (1, 1') and/or a second mass of the liquid content (40, 40'), wherein preferably the first mass and/or the second mass is determined continuously and/or in at least one working position which is defined in particular by an angular position ($\alpha_w$) of 0°, and/or by at least one second sensor (30), comprising in particular at least one force sensor which is preferably in operating connection with the driving device (10) and/or the pan (1, 1'), one torque sensor, one moment sensor and/or one strain gauge, preferably with at least one load cell.

6. A method according to any one of the preceding claims, **characterized in that** the geometric dimension ($\beta$, a, b, c, h, V), a type of the liquid content (40, 40'), the viscosity and/or the density, the level (x), the first mass and/or the second mass is or are determined based on a selection and/or determination of an operating mode of the cooking device, a cleaning program, a cooking program, a cooking process, a type of food to be cooked and/or a type of a cooking medium and/or cleaning medium based on filling the pan (1, 1') with a cooking and/or cleaning medium, said filling being controlled by the cooking device, in particular the regulating and/or control device (35), and/or based on a default setting made by a user of the cooking device and/or is determined based on at least one setting made by the user by means of an input device of the cooking device, in particular a user interface, wherein preferably a plurality of operating modes of the cooking device, of standard pan sizes, of pan sizes, of pan volumes, of cleaning programs, of cooking programs, of cooking processes, of types of food to be cooked and/or types of the cooking medium and/or cleaning medium, in particular types of food to be cooked and/or types of the cooking medium and/or cleaning medium having comparable densities and/or viscosities, are combined into groups and/or clustered for determining the geometric dimension ($\beta$, a, b, c, h, V), the type of the liquid content (40, 40'), the viscosity and/or the density, the level (x), the first mass and/or the second mass.

7. A method according to any one of the preceding claims, **characterized in that** the density of the liquid content (40, 40') is determined, in particular by means of the regulating and/or control device (35), from the level (x) and/or a volume of the liquid content (40, 40') which is in particular determined by means of the geometric dimension and/or the level (x), and the first mass, and/or the viscosity and/or at least one further property of the liquid content (40, 40') is determined by a frequency, an amplitude and/or a decay behavior of a mass oscillation of the liquid content (40, 40'), in particular resulting from and/or temporally after a predefined angular acceleration $\psi_d$.

8. A method according to any one of the preceding claims, **characterized in that**, preferably by means of the regulating and/or control device (35), the first derivative and/or the second derivative is determined in inverse proportion, in reciprocal proportion, antiproportionally and/or in indirect proportion to the level (x), the first mass, the density and/or the viscosity, existing work safety standards are taken into account when determining the first angular position ($\alpha_w$), the second angular position ($\alpha_w$), the tilting angle $\alpha$, the first derivative and/or the second derivative, the fist angular position ($\alpha_w$), the second angular position ($\alpha_w$), the tilting angle $\alpha$, the first derivative and/or the second derivative is or are continuously adjusted and/or the first angular position ($\alpha_w$), the second angular position ($\alpha_w$), the tilting angle $\alpha$, the first derivative and/or the second derivative is measured, in particular continuously and/or by means of at least one third sensor.

9. A method according to any one of the preceding claims, **characterized in that** for determining the first angular position ($\alpha_w$), the second angular position ($\alpha_w$), the tilting angle $\alpha$, the first derivative of the tilting angle $\alpha$ and/or the second derivative of the tilting angle $\alpha$ values are used which are stored in at least one table and/or in a memory of the cooking device and which preferably have been previously determined empirically and/or mathematical procedures are used.

10. A method according to any one of the preceding claims, **characterized in that** for determining the second angular position ($\alpha_w$), the tilting angle $\alpha$, the first derivative of the tilting angle $\alpha$ and/or the second derivative of the tilting angle $\alpha$, a pouring angle ($\alpha_A$) is determined, in particular a second angular position, at which on a change of an angular position of the pan (1, 1'), preferably a change from the working position, the liquid content (40, 40') starts to escape from the pan, in particular via the outlet, a critical rotational angle ($\alpha_d$) of the pan (1, 1') is determined at which in particular a degree of coverage of a pan bottom (15) with the liquid content (40, 40') reduces and/or the tilting angle $\alpha$, the first derivative of the tilting angle $\alpha$ and/or the second derivative of the tilting angle $\alpha$ is or are

determined based on the first angular position ($\alpha_w$) and/or the second angular position ($\alpha_w$), in particular a maximum permissible value of the first derivative is reduced if the second angular position ($\alpha_w$) is larger than a default value determined in particular as a function of a maximum second angular position ($\alpha_w$) and/or a difference between the first angular position ($\alpha_w$) and the pouring angle ($\alpha_A$) is smaller than a default value.

11. A method according to claim 10, **characterized in that**
the tilting angle $\alpha$, the first derivative of the tilting angle $\alpha$ and/or the second derivative of the tilting angle $\alpha$ within an angular range between the working position and the pouring angle ($\alpha_A$) and/or the critical rotational angle ($\alpha_d$) is determined essentially independently of a default value for a pouring volume and/or a pouring rate of the liquid content (40, 40') from the pan (1, 1'), in particular essentially exclusively based on the density, the viscosity, the level (x), the first mass and/or the second mass, and/or the first derivative of the tilting angle $\alpha$ is reduced prior to reaching the critical rotational angle ($\alpha_d$), preferably to avoid a wave motion and/or escape of the liquid content (40, 40'), in particular in the region of the outlet and/or outside the outlet.

12. A method according to claim 10 or 11, **characterized in that** the tilting angle $\alpha$, the first derivative of the tilting angle $\alpha$ and/or the second derivative of the tilting angle $\alpha$ within an angular range between the pouring angle ($\alpha_A$) and the maximum second angular position is determined at least additionally as a function of a default value for a pouring volume and/or a pouring rate of the liquid content (40, 40') from the pan (1, 1'), in particular to achieve a continuous outflow of the maximum possible volume of the liquid content (40, 40') within a minimum period of time.

13. A method according to any one of the preceding claims, **characterized in that** the second angular position ($\alpha_w$) is determined as a function of a volume of the liquid content (40, 40') of the pan (1, 1') which is to be poured from the pan (1, 1'), in particular a tilting movement of the pan (1, 1') is stopped and/or reversed on reaching the second angular position, in particular by reducing the first derivative from a positive value to zero or a negative value, wherein preferably after reaching the second angular position ($\alpha_w$) the pouring angle ($\alpha_A$) is determined once again and/or the tilting movement is continued with a positive first derivative, in particular by determining a new second angular position ($\alpha_w$) as a function of the volume of the liquid content (40, 40') of the pan (1, 1') which is to be poured from the pan (1, 1').

**Revendications**

1. Procédé pour commander ou régler un mouvement pour le versement d'un contenu (40, 40') liquide d'un creuset (1, 1') d'un appareil de cuisson, le creuset (1, 1') étant basculé pour le versement du contenu (40, 40') liquide du creuset (1, 1') au moyen d'au moins un dispositif d'entraînement (10) à partir d'une première position d'angle ($\alpha_w$) d'un angle de basculement $\alpha$ dans une seconde position d'angle ($\alpha_w$) et la première et la seconde position d'angle étant réglées par au moins un dispositif de réglage et/ou de commande (35) de l'appareil de cuisson, **caractérisé par** l'étape de procédé suivante:

   détermination de l'angle de basculement $\alpha$, d'au moins une première dérivée de l'angle de basculement $\alpha$ et/ou au moins d'une seconde dérivée de l'angle de basculement $\alpha$ sur la base d'au moins une dimension géométrique ($\beta$, a, b, c, h, V) du creuset (1, 1').

2. Procédé selon la revendication 1, **caractérisé en ce que** le procédé comprend le réglage et/ou la commande du basculement de la première position d'angle ($\alpha_w$) dans la seconde position d'angle ($\alpha_w$) au moyen du dispositif de réglage et/ou de commande (35) sur la base de l'angle de basculement $\alpha$ défini, de la première dérivée et/ou de la seconde dérivée,
l'angle de basculement $\alpha$ étant déduit en fonction du temps de préférence au moyen du dispositif de réglage et/ou du dispositif de commande (35) en tant que première dérivée, une vitesse d'angle $\omega$ de l'angle de basculement $\alpha$ étant déterminée en particulier en tant que première dérivée et/ou l'angle de basculement $\alpha$ étant déduit en fonction du temps en tant que seconde dérivée, une accélération d'angle $\psi$ de l'angle de basculement $\alpha$ étant déterminée en particulier en tant que seconde dérivée, et/ou le contenu liquide étant versé au moyen d'au moins une busette du creuset (1, 1'), canalisé et/ou acheminé en particulier par la busette.

3. Procédé selon la revendication 1 ou 2, **caractérisé en ce que**, en tant que dimension géométrique du creuset (1, 1'), au moins une largeur (a), une hauteur (b), une profondeur (c), un angle d'inclinaison ($\beta$), en particulier d'au moins une paroi, une forme de section, une forme de périphérie, au moins une grandeur et/ou une inclinaison d'une surface de fond, au moins une longueur de pourtour, au moins un volume de capacité (V) et/ou au moins une grandeur normale de la busette et/ou du creuset (1, 1') étant utilisé(s) et/ou déterminé(s).

4. Procédé selon l'une des revendications précédentes, **caractérisé en ce que** la première position d'angle ($\alpha_w$), la seconde position d'angle ($\alpha_w$), l'angle de basculement $\alpha$, la première dérivée de l'angle de basculement $\alpha$ et/ou la seconde dérivée de l'angle de basculement $\alpha$ sont déterminés en se basant sur au moins un niveau de remplissage (x) du contenu liquide (40, 40') dans le creuset (1, 1') et/ou au moins une densité et/ou viscosité du contenu liquide (40, 40') du creuset (1, 1'), le niveau de remplissage (x) étant mesuré de préférence au moyen d'au moins un premier capteur (25), mis en liaison active en particulier avec au moins une paroi du creuset (1, 1'), le niveau de remplissage (x) étant mesuré de préférence de façon continue et/ou avec l'utilisation de rayonnement électromagnétique, optique et/ou acoustique, comme le rayonnement ultrasonore, le rayonnement infrarouge, le rayonnement radar, le rayonnement à microondes, le rayonnement laser et/ou le rayonnement de lumière, et/ou au moyen d'au moins un thermocouple (20), de préférence, en particulier au moyen d'une minuterie, en fonction d'une variation dans le temps d'un signal de température du thermocouple (20), de façon capacitive, et/ou au moyen d'une pluralité de premiers capteurs (25).

5. Procédé selon l'une des revendications précédentes, **caractérisé en ce que** la première position d'angle ($\alpha_w$), la seconde position d'angle ($\alpha_w$), l'angle de basculement $\alpha$, la première dérivée de l'angle de basculement $\alpha$ et/ou la seconde dérivée de l'angle de basculement $\alpha$ sont déterminés en se basant sur une première masse du creuset (1, 1') et/ou une seconde masse du contenu liquide (40, 40'), la première masse et/ou la seconde masse étant définies de préférence de façon continue et/ou dans au moins une position de travail, qui est définie en particulier par une position d'angle ($\alpha_w$) de 0°, et/ou au moyen d'au moins un second capteur (30), comprenant en particulier au moins un capteur de force, mis en liaison active de préférence avec le dispositif d'entraînement (10) et/ou le creuset (1, 1'), un capteur de couple, un capteur de moment et/ou une jauge extensométrique, de préférence avec au moins une boîte dynamométrique.

6. Procédé selon l'une des revendications précédentes, **caractérisé en ce que** la dimension géométrique ($\beta$, a, b, c, h, V), un type du contenu liquide (40, 40'), la viscosité et/ou la densité, le niveau de remplissage (x), la première masse et/ou la seconde masse étant défini(s) en se basant sur une sélection et/ou détermination d'un mode de service de l'appareil de cuisson, d'un programme de nettoyage, d'un programme de cuisson, d'un processus de cuisson, d'un type d'article à cuire et/ou d'un type d'un milieu de cuisson et/ou d'un milieu de nettoyage, en se basant sur un remplissage du creuset (1, 1') commandé par l'appareil de cuisson, en particulier le dispositif de réglage et/ou de commande (35), avec un agent de cuisson ou de nettoyage et/ou en se basant sur une spécification effectuée par un utilisateur de l'appareil de cuisson et/ou étant déterminé(s) en se basant sur au moins un réglage de l'utilisateur au moyen d'un dispositif d'entrée, présentant en particulier une interface utilisateur, de l'appareil de cuisson, une pluralité de modes de service de l'appareil de cuisson, de grandeurs normales de creuset, de grandeurs de creuset, de volumes de creuset, de programmes de nettoyage, de programmes de cuisson, de processus de cuisson, de types d'article à cuire et/ou de types d'agent de cuisson et/ou d'agent de nettoyage, en particulier de types d'article à cuire et/ou de types d'agent de cuisson et/ou d'agent de nettoyage présentant des densités et/ou des viscosités comparables étant rassemblés en groupes et/ou clustérisés de préférence pour déterminer la dimension géométrique ($\beta$, a, b, c, h, V), la nature du contenu liquide (40, 40'), la viscosité et/ou la densité, le niveau de remplissage (x), la première masse et/ou la seconde masse.

7. Procédé selon l'une des revendications précédentes, **caractérisé en ce que** la densité du contenu liquide (40, 40') est déterminée en particulier au moyen du dispositif de réglage et/ou de commande (35), à partir du niveau de remplissage (x) et/ou d'un volume, déterminé en particulier au moyen de la dimension géométrique et/ou du niveau de remplissage (x), du volume du contenu liquide (40, 40') et de la première masse et/ou la viscosité et/ou au moins une autre propriété du contenu liquide (40, 40') est déterminée par une fréquence, une amplitude et/ou un comportement à l'évanouissement d'une vibration de masse du contenu liquide (40, 40'), en particulier comme résultat d'une accélération d'angle $\psi_d$ et/ou dans le temps selon une accélération d'angle $\psi_d$ prédéfinie.

8. Procédé selon l'une des revendications précédentes, **caractérisé en ce que** la première dérivée et/ou la seconde dérivée est/sont déterminée(s) de préférence au moyen du dispositif de réglage et/ou de commande (35), de façon inversement proportionnelle, de façon réciproquement proportionnelle, de façon anti-proportionnelle et/ou de façon indirectement proportionnelle au niveau de remplissage (x), à la première masse, la densité et/ou la viscosité, des normes de sécurité existantes de travail sont prises en compte pour la détermination de la première position d'angle ($\alpha_w$), de la seconde position d'angle ($\alpha_w$), de l'angle de basculement $\alpha$, de la première dérivée et/ou de la seconde dérivée, la première position d'angle ($\alpha_w$), la seconde position d'angle ($\alpha_w$), l'angle de basculement $\alpha$, la première dérivée et/ou la seconde dérivée est/sont réglé(s) de façon progressive et/ou la première position d'angle ($\alpha_w$), la

seconde position d'angle ($\alpha_w$), l'angle de basculement $\alpha$, la première dérivée et/ou la seconde dérivée est/sont mesuré(s) en particulier de façon continue et/ou au moyen d'un troisième capteur.

9. Procédé selon l'une des revendications précédentes, **caractérisé en ce que**, pour déterminer la première position d'angle ($\alpha_w$), la seconde position d'angle ($\alpha_w$), l'angle de basculement $\alpha$, la première dérivée de l'angle de basculement $\alpha$ et/ou la seconde dérivée de l'angle de basculement $\alpha$, on utilise des valeurs déposées dans au moins un tableau et/ou dans une mémoire de l'appareil de cuisson, de préférence déterminées auparavant de façon empirique et/ou on utilise des procédés mathématiques.

10. Procédé selon l'une des revendications précédentes, **caractérisé en ce que**, pour déterminer la seconde position d'angle ($\alpha_w$), l'angle de basculement $\alpha$, la première dérivée de l'angle de basculement $\alpha$ et/ou la seconde dérivée de l'angle de basculement $\alpha$, on détermine un angle de versement ($\alpha_A$), en particulier une seconde position d'angle, dans lequel le contenu liquide (40, 40') commence à sortir du creuset, en particulier de la busette, dans le cas d'une variation d'une position d'angle du creuset (1, 1'), de préférence une variation à partir de la position de travail, un angle de rotation critique ($\alpha_d$) du creuset (1, 1') est déterminé, dans lequel en particulier un degré de recouvrement d'un fond de creuset (15) avec le contenu liquide (40, 40') se réduit, et/ou l'angle de basculement $\alpha$, la première dérivée de l'angle de basculement $\alpha$ et/ou la seconde dérivée de l'angle de basculement $\alpha$ est ou sont déterminé(s) en se basant sur la première position d'angle ($\alpha_w$) et/ou la seconde position d'angle ($\alpha_w$), et en particulier une valeur maximale autorisée de la première dérivée est réduite lorsque la seconde position d'angle ($\alpha_w$) est supérieure à une valeur prédéfinie, déterminée en particulier en fonction d'une seconde position d'angle maximale ($\alpha_w$) et/ou une différence entre la première position d'angle ($\alpha_w$) et l'angle de busette ($\alpha_A$) est plus faible qu'une valeur prédéfinie.

11. Procédé selon la revendication 10, **caractérisé en ce que** l'angle de basculement $\alpha$, la première dérivée de l'angle de basculement $\alpha$ et/ou la seconde dérivée de l'angle de basculement $\alpha$ sont définis dans une plage d'angles entre la position de travail et l'angle de busette ($\alpha_A$) et/ou l'angle de rotation critique ($\alpha_d$) sensiblement indépendamment d'une valeur prédéfinie pour un volume de coulée et/ou une vitesse de coulée du contenu liquide (40, 40') à la sortie du creuset (1, 1'), en particulier en se basant principalement exclusivement sur la densité, la viscosité, le niveau de remplissage (x), la première masse, et/ou la seconde masse, et/ou la première dérivée de l'angle de basculement $\alpha$ est réduite avant d'atteindre l'angle de rotation critique ($\alpha_d$), de préférence pour éviter un mouvement ondulé et/ou une sortie du contenu liquide (40, 40'), en particulier dans la zone de la busette et/ou à l'extérieur de la busette.

12. Procédé selon la revendication 10 ou 11, **caractérisé en ce que** l'angle de basculement $\alpha$, la première dérivée de l'angle de basculement $\alpha$ et/ou la seconde dérivée de l'angle de basculement $\alpha$ sont déterminés dans une plage d'angles comprise entre l'angle de busette ($\alpha_A$) et la seconde position maximale au moins en supplément en fonction d'une valeur prédéfinie pour un volume de coulée et/ou une vitesse de coulée du contenu liquide (40, 40') à la sortie du creuset (1, 1'), en particulier pour obtenir un écoulement continu du volume maximal possible du contenu liquide (40, 40') dans un laps de temps minimum.

13. Procédé selon l'une des revendications précédentes, **caractérisé en ce que** la seconde position d'angle ($\alpha_w$) est déterminée en fonction d'un volume du contenu liquide (40, 40') du creuset (1, 1'), qui doit être versé à la sortie du creuset (1, 1'), en particulier un mouvement de basculement du creuset (1, 1') est arrêté et/ou inversé lorsqu'on atteint la seconde position d'angle, en particulier par réduction de la première dérivée d'une valeur positive sur zéro ou une valeur négative, l'angle de busette ($\alpha_A$) étant déterminé à nouveau de préférence après avoir atteint la seconde position d'angle ($\alpha_w$) et/ou le mouvement de basculement étant poursuivi avec une première dérivée positive, en particulier par détermination d'une nouvelle seconde position d'angle ($\alpha_w$) en fonction du volume du contenu liquide (40, 40') du creuset (1, 1') qui doit être versé à la sortie du creuset (1, 1').

Figur 1

Figur 2

Figur 3

Figur 4

Figur 5

Figur 6

Figur 7

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006037254 A1
- EP 1488721 A1